# EUROPEAN PATENT APPLICATION

(11) **EP 4 683 171 A1**
(43) Date of publication of application: **21.01.2026**
(21) Application number: 24774529.2
(22) Date of filing: 16.02.2024
(51) Int. Cl.: H02J 50/20, H02J 7/00, H02J 50/80

(54) **PROGRAM, METHOD, RECEIVER, WIRELESS POWER SUPPLY SYSTEM, AND TRANSMITTER**

(30) Priority: 17.03.2023 JP 2023042573
(71) Applicant: Aeterlink Corp., Tokyo 100-0005 (JP)
(72) Inventor: HIKOSAKA, Shingo, Tokyo 100-0005 (JP); KODATE, Naoto, Tokyo 100-0005 (JP); TAKEUCHI, Shingo, Tokyo 100-0005 (JP)
(74) Representative: Feder Walter Ebert
(86) International application number: PCT/JP2024/005502
(87) International publication number: WO 2024/195384

(57) **Abstract**

To provide a program for operating a receiver 200 which includes a rectifier 202 for rectifying the transmitting power, an electric power management part 203 for managing a rectified voltage from the rectifier 202, and a charger 204 to be electrically charged with an output voltage from the electric power management part 203. The program causes a microcomputer 205 to execute a first step of detecting the rectified voltage and a power supply voltage which is a charging voltage of the charger 204; a second step of comparing the rectified voltage detected in the first step with a first threshold value prescribed for the rectified voltage, and comparing the power supply voltage detected in the first step with a second threshold value prescribed for the power supply voltage; and a third step of determining a power receiving state of the receiver 200 based on at least one of the comparison results in the second step.

## Description

### FIELD OF THE INVENTIONF

The present disclosure relates to a program, a method, a receiver, a wireless power feeding system, and a transmitter.

### BACKGROUND

In wireless power feeding systems, there is a technique to charge a secondary battery of a receiver by wirelessly transmitting electric power thereto, and to carry out a control such that when a rectified output voltage at the time of wirelessly feeding power is equal to or more than a predetermined value, a constant voltage generation part which supplies a power supply voltage to a sensor device is fed with electric power by wirelessly feeding power thereto, and that when the rectified output voltage is less than the predetermined value, the constant voltage generation part is fed with electric power from the secondary battery (Patent Document 1).

### PRIOR ART DOCUMENTS

[Patent Document 1] Japanese Patent Application Publication No. 2019-004611

### SUMMARY OF THE INVENTION

### [Problem to be solved by the invention]

When power is fed wirelessly, the power feeding state is influenced by the environment, and as a result, it is difficult to stably supply a fixed amount of electric power, and there is a possibility that the amount of power to be fed is fluctuated greatly over time.

However, in the technique disclosed in the Patent Document 1, the power feeding state of the receiver, in other words, the power receiving state of the receiver is not determined.

### [Means for solving the problem]

An object of the present disclosure is to provide a technique for determining a power receiving state of a receiver when power is fed wirelessly to the receiver.

A receiver for wirelessly receiving transmitting power consisting of AC signals is provided. This receiver includes a rectifier for rectifying the transmitting power, an electric power management part for managing a rectified voltage from the rectifier; and a charger to be electrically charged with an output voltage from the electric power management part. In addition, a program is provided to cause a processor to execute:
a first step of detecting the rectified voltage and a power supply voltage which is a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step.

### [Effects of the Invention]

According to the present disclosure, it is possible to provide a technique for determining a power receiving state of a receiver when power is fed wirelessly to the receiver.

### BRIEF DESCRIPTION OF THE DRAWINGS

FIG. 1 is a diagram illustrating an entire configuration of a wireless power feeding system or wireless power transfer system (WPT system) according to a first embodiment.
FIG. 2 is a block diagram illustrating a configuration example of a transmitter and that of a receiver.
FIG. 3 is a diagram illustrating an outline of a circuit configuration of a receiver according to a first embodiment.
FIG. 4 is a diagram illustrating a functional configuration of a receiver according to a first embodiment.
FIG. 5 is a diagram illustrating a data structure of a determination table according to a first embodiment.
FIG. 6 is a flowchart illustrating one example of a processing flow at a side of a receiver according to a first embodiment.
FIG. 7 is a diagram giving an explanation of one example of a process for determining a power receiving state of a receiver in a WPT system according to a second embodiment.
FIG. 8 is a diagram giving an explanation of one example of a process for determining a power receiving state of a receiver in a WPT system according to a second embodiment.
FIG. 9 is a diagram illustrating a data structure of a determination table according to a second embodiment.
FIG. 10 is a diagram giving an explanation of another example of a process for determining a power receiving state of a receiver in a WPT system according to a second embodiment.
FIG. 11 is a diagram giving an explanation of one example of a process for determining a power receiving state of a receiver in a WPT system according to a third embodiment.
FIG. 12 is a diagram giving an explanation of a state transition of a receiver in a WPT system according to a third embodiment.
FIG. 13 is a diagram giving an explanation of one example of a process for determining a power receiving state of a receiver in a WPT system according to a third embodiment.
FIG. 14 is a diagram giving an explanation of one example of a process for determining a power receiving state of a receiver in a WPT system according to a third embodiment.
FIG. 15 is a diagram giving an explanation of one example of a process for determining a power receiving state of a receiver in a WPT system according to a fourth embodiment.
FIG. 16 is a diagram giving an explanation of one example of a process for determining a power receiving state of a receiver in a WPT system according to a fourth embodiment.
FIG. 17 is a diagram giving an explanation of one example of a process for determining a power receiving state of a receiver in a WPT system according to a fourth embodiment.
FIG. 18 is a diagram giving an explanation of one example of a process for determining a power receiving state of a receiver in a WPT system according to a fourth embodiment.

### DESCRIPTION OF THE PREFERRED EMBODIMENTS

Hereinafter, the present embodiments will be explained with referring to the figures. The same reference signs are attached to the common configuration elements, and the duplicated explanations are omitted for those configuration elements. The following embodiments are provided for the purpose of not unreasonably limiting the present disclosure described in the claims. Also, not all of the configuration elements described in the embodiments are always necessary in the present disclosure. Further, the figures are schemas, and are not always strictly illustrated.

In the following descriptions, a "processor" shall mean one or more processors. Typically, the at least one processor is a microprocessor such as a CPU (or Central Processing Unit), but other types of processor such as a GPU (or Graphics Processing Unit) can also be used for the processor. The at least one processor may be a single-core processor or a multi-core processor.

In addition, the at least one processor may be a processor in a broad sense, such as a hardware circuit capable of performing some or all of processes, for example, the hardware circuit may be a FPGA (or Field-Programmable Gate Array) or an ASIC (or Application Specific Integrated Circuit).

Further, in the following explanations, an expression such as a "*** table" may be used to give an explanation for information with which an output is obtained with respect to an input. This information may be data having an arbitrary structure, or it may be a learning model such as a neural network capable of generating an output with respect to an input. Therefore, it is possible to paraphrased a "*** table " to "*** information".

Further, in the following descriptions, a configuration of each table is given as one example. One table may be divided into two or more tables. Also, some or all of two or more tables may be made to be one table.

Further, in the following descriptions, a "program" can be expressed as a subject to carry out the processing. However, it is also possible to express a "processor (or a device such as a controller having the processor)" as the subject to carry out the processes. Because, when a processor executes a program, the program carries out predetermined processes by appropriately using a storage part (or memory) and/or an interface part.

The program may be installed in a device such as a computer, or may be provided in a program distribution server or a computer readable medium (for example, a non-transitory computer readable medium). In the following descriptions, two or more programs may be implemented as one program. Alternatively, one program may be implemented as two or more programs.

Further, in the following descriptions, identification numbers are used as identification information for indicating various objects. However, it is possible to use identification information (for example, identifiers having alphabetic characters and/or codes) different from the identification numbers.

Further, in the following descriptions, reference signs (or common reference signs in a group of the reference signs) may be used to give an explanation for configuration elements having the same or similar kind when these configuration elements are not distinguished from each other. Also, identification numbers (or reference signs) may be used to give an explanation for configuration elements having the same or similar kind when these configuration elements are distinguished from each other.

Further, in the following descriptions, control lines and information lines which are considered to be necessary to give an explanation are illustrated, but all the control lines and information lines of the product are not necessarily illustrated. Also, all configurations may be made to be connected with each other.

### <0. System Overview>

A WPT system according to the present disclosure includes a receiver which is capable of receiving electric power (or power) transmitted from a transmitter, and is capable of feeding electric power to a device, based on a wireless power feeding system.

Hereinafter, in the following first embodiment, the details are described. In the WPT system according to the present disclosure, an antenna of a receiver receives microwave power (or a substantially continuous wave(s) having 920MHz (CW)), and a rectifier circuit functionally connected to the antenna converts the radio wave into a DC voltage. And an electric power management part controls the DC voltage outputted from the rectifier circuit and supplies the voltage to a charger (which is mainly a capacitor).

A power storage element(s) constituting the charger is not particularly limited, and for example, it may be a capacitor, a lithium-ion battery, an electrical double-layer capacitor, a ceramic capacitor, or the like. In the WPT system according to the present disclosure, it is explained that the charger mainly includes a capacitor(s).

A voltage fed from the electric power management part is supplied to the charger when a voltage stored in the charger is less than a predetermined value. When the charger is charged to a predetermined voltage, electric power fed from the electric power management part is supplied to a microcomputer.

When electric power is fed wirelessly, the power feeding state can be influenced by the environment, and accordingly, it is difficult to stably feed a constant amount of power, and also the amount of electric power to be fed greatly fluctuates with time. Similarly, even in another type of wireless power feeding system based on a solar cell or a laser system, the amount of electric power to be fed may be fluctuated. In such situations where the power feeding state is not stable, it is necessary to diagnose whether feeding power can be continued in order to stably feed power to a microcomputer of the receiver and further to a sensor device which is included in the receiver, on each occasion.

If the result of the diagnosis is not preferable, it is necessary to notify the transmitter and/or the information processing device that monitors the transmitter and the receiver in the WPT system, and in some cases, it is required to terminate the system normally. The diagnosis is performed at a stage where the transmitter and/or the receiver is/are installed and at both of a stage when the operation is actually performed and a stage when the maintenance is performed.

However, as described above, the amount of electric power to be fed to the receiver can greatly fluctuate with time, and accordingly, the power receiving state of the receiver may not be precisely determined by instantaneously checking the voltage value in the receiver. For example, even when the power supply voltage corresponding to the charging voltage of the charger has a normal voltage value, when the rectified voltage corresponding to the output value from the rectifier circuit has a voltage value close to zero, electric power cannot be stably fed to the receiver, and therefore, there is a possibility that feeding electric power to a device may eventually be interrupted.

Therefore, it is conceivable that the receiver is configured to acquire two voltage values of the power supply voltage and of the rectified voltage and to transmit the data to the transmitter and/or the information processing device. However, in such a case, it is required to frequently transmit the data, and accordingly, the power consumption in the receiver will be increased. Furthermore, in a case that one transmitter is associated with several tens or close to a hundred receivers, the computational load of the transmitter (including the information processing device) will be increased.

Therefore, in the WPT system according to the present disclosure, the power supply voltage and the rectified voltage of the receiver are respectively made to be compared with the threshold value to determine whether the receiver is capable of maintaining the function of feeding power to the microcomputer or the like.

It should be understood that the specific configurations of the WPT system according to the present disclosure are not limited to the configurations which have been described above.

### <1. First Embodiment>

### <1.1 Entire Configuration of System>

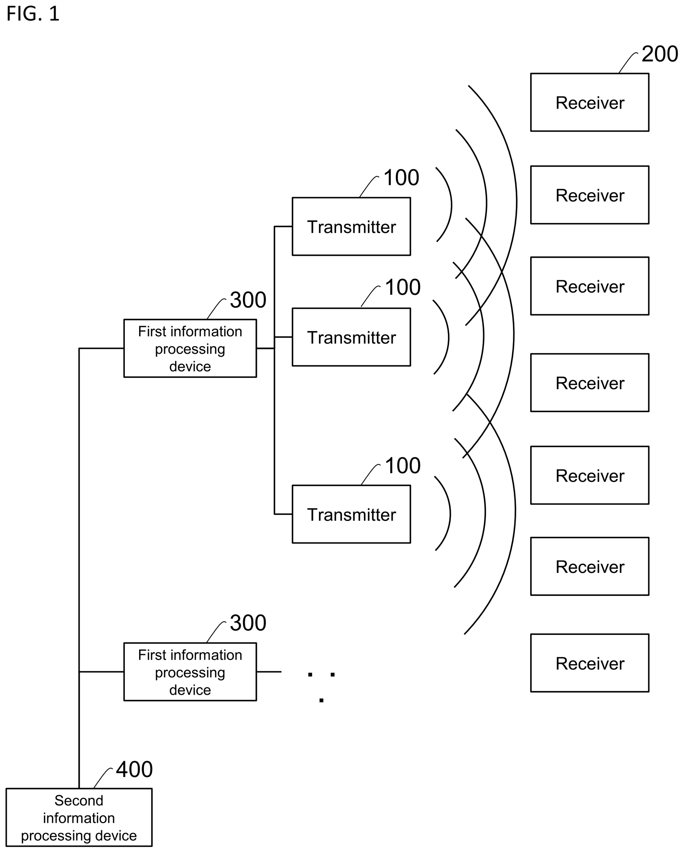

FIG. 1 shows a diagram giving an explanation of an entire configuration of a wireless power feeding system or wireless power transfer system (WPT system) according to a first embodiment.

The WPT system 1 illustrated in FIG. 1 includes, for example, a transmitter(s) 100, a receiver(s) 200, a first information processing device(s) 300, and a second information processing device(s) 400. For example, the WPT system 1 illustrated in FIG. 1 is capable of being used in a building, a factory or the like.

In the present specification, the transmitter 100 means a transmitting device (or electric power transmitting device) 100 capable of wirelessly transmitting electric power. Similarly, the receiver 200 means a receiving device (or electric power receiving device) 200 capable of wirelessly receiving electric power. As described below, the transmitter 100 may be configured to transmit information, for example, information relating to a state(s) of the receiver 200 or information relating to a measurement result(s) of a sensors, to the transmitter 100, as a data signal(s), and the transmitter 100 may be configured to receive such a data signal. In such a case, the transmitter 100 functions as a receiver capable of receiving a data signal, and the receiver 200 functions as a transmitter capable of transmitting a data signal.

In FIG. 1, it is illustrated that three pieces of transmitters 100 are included in the WPT system 1, but the number of the transmitters 100 included in the WPT system 1 is not limited to three. The number of the transmitters 100 included in the WPT system 1 may be two or less, or may be four or more.

In FIG. 1, it is illustrated that seven pieces of receivers 200 are included in the WPT system 1, but the number of the receivers 200 included in the WPT system 1 is not limited to seven. The number of the receivers 200 included in the WPT system 1 may be six or less, or may be eight or more.

In FIG. 1, it is illustrated that two pieces of first information processing device 300 are included in the WPT system 1, but the number of the first information processing device 300 included in the WPT system 1 is not limited to two. The number of the first information processing device 300 included in the WPT system 1 may be one, or may be three or more.

For example, the transmitter 100 transmits a power feeding signal(s) or a data signal(s) to the receiver 200. For example, the transmitter 100 transmits a power feeding signal to the receiver 200 by a radio wave(s) in a 920MHz band. For example, the transmitter 100 transmits a data signal to the receiver 200 by a radio wave(s) in a 2.4GHz band. The transmitter 100 may also transmit a data signal by a radio wave in a 920MHz band.

In one example, the transmission signal to be transmitted from the transmitter 100 may be a continuous wave (CW) having predetermined electric power. In addition, the frequency band of the power feeding signal is, for example, a 920MHz band, considering the distance between the transmitter 100 and the receiver 200. If the frequency band is higher than the exemplified frequency band, there is a possibility that predetermined operable power may not be fed to the receiver 200, unless the distance between the transmitter 100 and the receiver 200 is shortened. Therefore, an appropriate frequency band can be determined by taking into consideration a practical range (for example, the distance between the transmitter 100 and the receiver 200 is made to be several meters).

In some cases, a restriction may be imposed to intermittently transmit power feeding signals having predetermined electric power, by the legislation of a country where the WPT system 1 is installed. In one example, when power feeding signals transmitted from the transmitter 100 fall under the provisions of radio stations prescribed in the Radio Act of Japan, it may be necessary to provide a pause period for temporarily stopping transmitting the power feeding signals (regardless of qualifications). In this case, considering a certain degree of continuity on a time axis, it cannot be said that the power feeding signals are continuous waves. However, though it is required to provide a pause period, this time period can be a very little time, and thus it is still possible to regard the power feeding signals to be transmitted from the transmitter 100 as continuous waves.

For example, the transmitter 100 may feed electric power to one receiver 200 or to a plurality of receivers 200. Also, for example, the transmitter 100 may transmit data signals to one receiver 200 or may transmit data signals to a plurality of receivers 200. In addition, the transmitter 100 may transmit data signals which are the same as those of the other transmitter(s) 100. Alternatively, the transmitter 100 may transmit data signals which are different from those of the other transmitter(s) 100. Further, for example, the transmitter 100 may transmit predetermined command signals, as the data signals, to the receiver 200, or may transmit preset signals, as the data signals, to the receiver 200.

For example, the transmitter 100 receives data signals transmitted from the receiver 200. Also, for example, the transmitter 100 may receive data signals transmitted from one receiver 200 or may receive data signals transmitted from a plurality of receivers 200. In addition, the transmitter 100 transmits the data signals transmitted from the receiver 200 to the first information processing device 300. Also, the transmitter 100 transmits information relating to the state of the transmitter 100 to the first information processing device 300.

For example, the receiver 200 receives power feeding signal(s) or data signal(s), transmitted from the transmitter 100. For example, when the receiver 200 is provided with a charger, the receiver 200 converts power feeding signals transmitted from the transmitter 100 into electric power, and stores the converted power in the charger. For example, when the receiver 200 is provided with a certain sensor, the receiver 200 converts power feeding signals transmitted from the transmitter 100 into electric power, and drives the sensor by the converted power.

For example, the receiver 200 transmits information relating to the state of the receiver 200 or information relating to the measurement result of the sensor, to the transmitter 100, as the data signal.

The first information processing device 300 is configured to monitor the operations of the transmitter 100 and of the receiver 200, each of which is included in the WPT system 1. For example, the first information processing device 300 determines whether the transmitter 100 or the receiver 200 is in a predetermined state, based on the information, transmitted from the transmitter 100, which is relating to the state of the transmitter 100 and that of the receiver 200. When it is determined that the state is in a predetermined state, the first information processing device 300 transmits predetermined information to the second information processing device 400.

In addition, the first information processing device 300 accumulates information relating to the transmitter 100 and the receiver 200, each of which is included in the WPT system 1. For example, the first information processing device 300 stores information, transmitted from the transmitter 100, which is relating to the state of the transmitter 100 and that of the receiver 200, in a storage part (or memory) provided in the first information processing device 300.

In addition, the first information processing device 300 is configured to control the operation of the transmitter 100 which is included in the WPT system 1.

The second information processing device 400 is configured to be operated by an administrator of the WPT system 1. When the second information processing device 400 receives, from the first information processing device 300, a notification indicating that the transmitter 100, the receiver 200, or both of them which are included in the WPT system 1 are in a predetermined state, the second information processing device 400 notifies the user that the transmitter 100, the receiver 200, or both of them are in the predetermined state.

In addition, the second information processing device 400 analyzes the information, stored in the first information processing device 300, which is relating to the state of the transmitter 100 and that of the receiver 200 and notifies the user the predetermined information. The predetermined information is, for example, as followings;
· Information relating to the arrangement of the transmitter(s) 100,
· Information relating to the arrangement of the receiver(s) 200,
· Information relating to the power consumption,
· Information relating to the power intensity.

### <1.2 Configurations of Transmitter and Receiver>

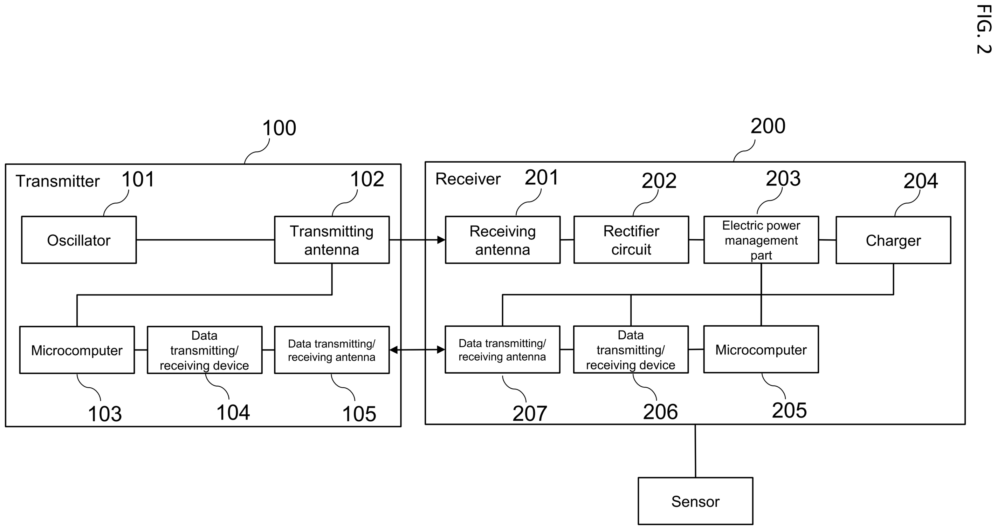

FIG. 2 shows a block diagram illustrating a configuration example of a transmitter and that of a receiver.

As illustrated in FIG. 2, the transmitter 100 and the receiver 200 are, for example, spaced apart from each other by a predetermined interval. For example, the transmitter 100 and the receiver 200 are separated from each other by a distance of about several meters. Specifically, for example, the transmitter 100 is fixedly installed at a high place in a building (for example, at a predetermined high position on a ceiling or a wall). The receiver 200 may be installed in a predetermined device in a building or placed in the vicinity of a device which is required to be fed with power. Also, the receiver 200 may be configured to be carried by a user. The transmitter 100 transmits power feeding signals to the receiver 200 by radio waves of a predetermined frequency, for example, in a 920MHz band. The receiver 200 converts the power feeding signals transmitted from the transmitter 100 into electric power, and then charges the converted power or supplies the converted power to a predetermined device.

For example, the transmitter 100 is provided with an oscillator 101, a transmitting antenna 102, a microcomputer (or controller) 103, a data transmitting/receiving device 104, and a data transmitting/receiving antenna 105. In one example, the oscillator 101, the microcomputer 103, and the data transmitting/receiving device 104 may be mounted on a PCB (or printed circuit board).

The oscillator 101 is configured to oscillate signals in a predetermined frequency band(s), for example, in a 920MHz band. The oscillated signals may be amplified, according to the need, to remove unnecessary frequency components.

For example, the transmitting antenna 102 is configured to be capable of efficiently transmitting radio waves in a 920MHz band. The transmitting antenna 102 radiates the signals which have been oscillated by the oscillator 101, as power feeding signals.

The microcomputer 103 is configured to control the operations of the transmitter 100. For example, the microcomputer 103 is realized by a semiconductor device equipped with an ARM processor. For example, the microcomputer 103 controls the transmission of radio waves to be emitted from the transmitting antenna 102.

For example, when the WPT system 1 is used in a factory, it is desirable that the receiver 200 feeds power of a predetermined value or more. Therefore, the microcomputer 103 controls the transmission of radio waves to be emitted from the transmitting antenna 102, based on feedback signals transmitted from the receiver 200. For example, the feedback signals relate to voltage values of a predetermined part in the receiver 200. By using the feedback signal, it becomes possible to simulatively perceive the electric field strength of the receiver 200. In a case when the transmitting antenna 102 includes, for example, a plurality of antenna elements, the microcomputer 103 controls the transmitting antenna 102 so as to transmit power feeding signals from an antenna element which is determined to be optimum. For example, the microcomputer 103 adjusts the polarization direction of the power feeding signal by switching the antenna element(s) to be driven. Further, the microcomputer 103 adjusts the directivity of the power feeding signal by adjusting the driving timing of the antenna element(s).

In addition, when the WPT system 1 is used in a building such as a room, the microcomputer 103 controls the transmission of radio waves to be emitted from the transmitting antenna 102, based on the feedback signals transmitted from the receiver 200. In a case when the transmitting antenna 102 is a single antenna element, the microcomputer 103 optimizes the power feeding output emitted from the transmitting antenna 102.

The data transmitting/receiving device 104 is configured to perform processes such as a process for converting the digital data into an analog signal(s) and a process for modulating the analog data. Further, the data transmitting/receiving device 104 performs processes such as a process for demodulating signals which have been extracted from data signals received by the data transmitting/receiving antenna 105, and a process for digitizing the demodulated analog data. For example, the data transmitting/receiving device 104 extracts feedback signals from the data signals which have been received by the data transmitting/receiving antenna 105, converts the feedback signals into digital data and transmits the digital data to the microcomputer 103.

For example, the data transmitting/receiving antenna 105 is configured to be capable of efficiently transmitting and receiving radio waves in a 2.4GHz band. The data transmitting/receiving antenna 105 emits the data signals supplied from the data transmitting/receiving device 104. Further, the data transmitting/receiving antenna 105 receives the data signals transmitted from the receiver 200.

For example, the receiver 200 is provided with a receiving antenna 201, a rectifier circuit 202, an electric power management part (or power manager) 203, a charger 204, a microcomputer 205, a data transmitting/receiving device 206, and a data transmission/receiving antenna 207. For example, the rectifier circuit 202, the electric power management part 203, the charger 204, the microcomputer 205, and the data transmitting/receiving device 206 may be mounted on a PCB or a FPC (or flexible board).

For example, the receiving antenna 201 is configured to be capable of efficiently receiving radio waves in a 920MHz band. The receiving antenna 201 receives power feeding signals emitted from the transmitting antenna 102.

The rectifier circuit 202 is configured to rectify radio waves received as power feeding signals and then converts them into DC voltage.

The electric power management part 203 is configured to manage the DC voltage. For example, the electric power management part 203 controls the charging voltage based on the DC voltage. The electric power management part 203 charges the charger 204 by controlling the charging voltage. In addition, for example, when electric power of a predetermined capacity or more is stored in the charger 204, the electric power management part 203 supplies the DC voltage to an arbitrary member which is connected thereto.

In addition, the electric power management part 203 releases electric power accumulated in the charger 204 in accordance with a control from the microcomputer 205.

The charger 204 accumulates electric power in response to an instruction from the electric power management part 203. In addition, the charger 204 releases the accumulated electric power in response to an instruction from the electric power management part 203.

The microcomputer 205 (hereinafter, which is referred to as a MCU or Microcontroller as appropriate) is configured to control the operations of the receiver 200. The microcomputer 205 is driven by a DC voltage supplied from the electric power management part 203 or by electric power which has been accumulated in the charger 204. The microcomputer 205 controls the electric power management part 203 to release electric power accumulated in the charger 204.

The receiver 200 may be connected with a sensor of an arbitrary type. For example, a thermal sensor, a temperature sensor, an optical sensor, a humidity sensor, a vibration sensor, or the like may be connected to the receiver 200. For example, when a sensor is connected to the receiver 200, the sensor is driven by a DC voltage supplied from the electric power management part 203 or by electric power released from the charger 204. The microcomputer 205 continuously or intermittently monitors voltage values at a predetermined part of the receiver 200, states of the sensor which is connected to the receiver 200, and/or information to be detected by the sensor. The microcomputer 205 transmits the voltage value at a predetermined part of the receiver 200, the state of the sensor connected to the receiver 200, and information to be detected by the sensor, as the digital data, to the data transmitting/receiving device 206.

The data transmitting/receiving device 206 is configured to perform processes such as an analog conversion process of digital data supplied from the microcomputer 205 and a modulation process of analog data. Further, the data transmitting/receiving device 206 is configured to perform processes such as a demodulation process of analog data, a digitization process of demodulated analog data. For example, the data transmitting/receiving device 206 is driven by a DC voltage supplied from the electric power management part 203 or by electric power released from the charger 204.

For example, the data transmitting/receiving antenna 207 is configured to be capable of efficiently transmitting and receiving radio waves in a 2.4GHz band. The data transmitting/receiving antenna 207 emits data signals supplied from the data transmitting/receiving device 206. Further, the data transmitting/receiving antenna 207 receives data signals transmitted from the transmitter 100. For example, the data transmitting/receiving antenna 207 is driven by a DC voltage supplied from the electric power management part 203 or by electric power released from the charger 204.

The transmission format of the data signals to be transmitted (or emitted) from the data transmitting/receiving antenna 207 is arbitrary. In a particular example, the data signals emitted from the data transmitting/receiving antenna 207 are radio waves in a 2.4GHz band, and accordingly, these signals may be signals that comply with Bluetooth (registered trademark) or IEEE 802.11x (that is, so-called WIRELESS LAN) format. In such cases, it is preferable that the data transmitting/receiving device 104 of the transmitter 100 also has a function of analyzing the data signals that comply with the format of the data signals to be transmitted from the receiver 200. Alternatively, the first information processing device 300 may be provided with such a function.

### <1.3 Circuit Configuration of Receiver >

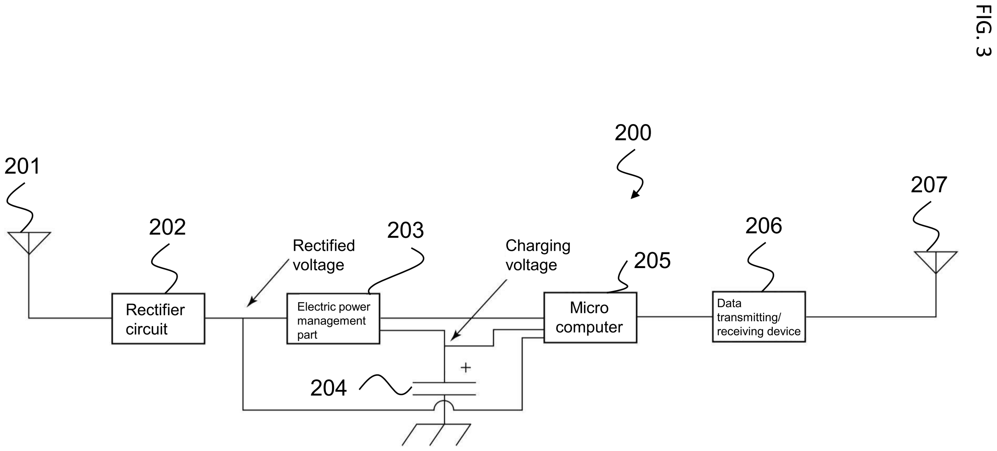

FIG. 3 shows a diagram illustrating an outline of a circuit configuration of the receiver 200 illustrated in FIG. 2.

In the following descriptions, detailed explanations of the configuration elements of the receiver 200 which have been described with referring to FIG. 2 will be omitted. In addition, only main parts of the configuration elements of the receiver 200 in FIG. 2 are illustrated.

In FIG. 3, both of the rectified voltage corresponding to the voltage at a post stage of the rectifier circuit 202 (that is, at an output side of the rectifier circuit 202), and the power supply voltage corresponding to the charging voltage of the charger 204 are inputted to the microcomputer 205, and then these voltages are converted into digital values by an A/D converter which is included in the microcomputer 205 so as to be used in a determination of a power receiving state which will be described later.

### <1.4 Functional Configuration of Microcomputer 205>

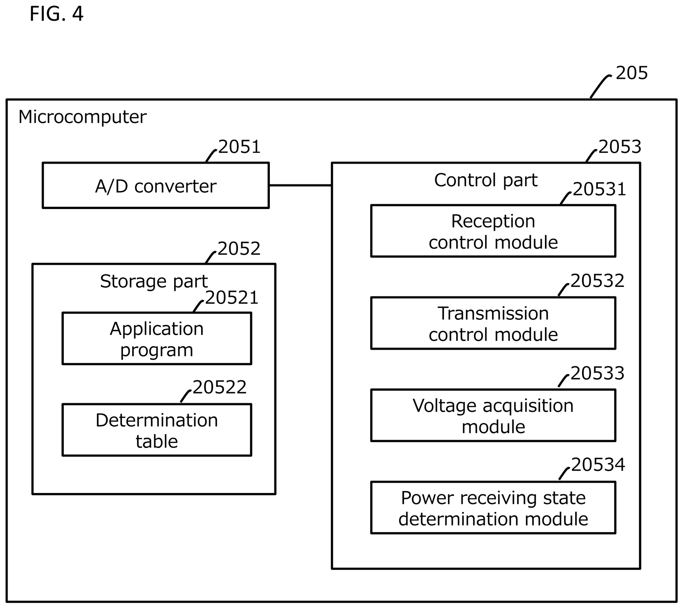

FIG. 4 shows an example giving an explanation of a functional configuration of the microcomputer 205 according to the first embodiment. As illustrated in FIG. 4, the microcomputer 205 exhibits functions of an A/D converter 2051, a storage part 2052, and a control part 2053.

The A/D converter 2051 performs a process of converting analog signals which have been inputted to the microcomputer 205 into digital values. The A/D converter 2051 may be provided with a circuit capable of functioning as an A/D converter. The digital values to be outputted from the A/D converter 2051 are inputted to the control part 2053. The A/D converter 2051 of the present embodiment converts the rectified voltages and the power supply voltages, both of which are analog signals, into digital values, respectively, and then outputs the converted digital values to the control part 2053.

For example, the storage part 2052 is provided with a determination table 20522.

The determination table 20522 is a table describing a method for determining a power receiving state of the receiver 200 with respect to both of a condition whether the power supply voltage is equal to or less than a threshold value and a condition whether the rectified voltage is equal to or less than a threshold value. The determination table 20522 may be created in advance and stored in the storage part 2052 of the microcomputer 205 when the receiver 200 or the microcomputer 205 is manufactured. Also, the determination table 20522 may be transmitted from at least one of the transmitter 100, the first information processing device 300, and the second information processing device 400 after the receiver 200 is installed.

The control part 2053 is realized when the microcomputer 205 reads an application program 20521 stored in the microcomputer's storage part 2052 and executes instructions included in the application program 20521. When the control part 2053 operates based on the application program 20521, the control part 2053 exhibits functions as indicated by a reception control module 20531, a transmission control module 20532, a voltage acquisition module 20533, and a power receiving state determination module 20534.

The reception control module 20531 is configured to control a process for causing the microcomputer 205 to receive signals which have been transmitted from an external device (for example, the transmitter 100) in accordance with a communication protocol.

The transmission control module 20532 is configured to control a process for causing the microcomputer 205 to transmit signals to an external device (for example, the transmitter 100) in accordance with a communication protocol.

For example, the voltage acquisition module 20533 is configured to acquire digital values which have been converted from the power supply voltage and from the rectified voltage, by the A/D converter 2051. The acquisition timing and acquisition interval for acquiring the power supply voltage and the rectified voltage, by the voltage acquisition module 20533 are arbitrary. For example, these voltages may be acquired periodically, or may be acquired in accordance with a timing at which the transmission control module 20532 transmits physical quantities which are measured by the sensor, to the transmitter 100 or the like, as the data signals. Here, the term "in accordance with " implies that the signal representing the determination result is transmitted to the transmitter 100 or the like at substantially the same timing of the data signal, considering the period of time necessary for the determination operation to be performed by the power receiving state determination module 20534 which will be described later.

The acquisition timing for acquiring the power supply voltage and the rectified voltage by the voltage acquisition module 20533 is made to be matched with the timing at which the transmission control module 20532 transmits physical quantities to be measured by the sensor to the transmitter 100 or the like, as the data signals. Because the microcomputer 20 consumes an enormous amount of power by transmitting the data signals, it is conceivable that the power receiving state of the receiver 200 can be appropriately determined by determining the power receiving state of the receiver 200 when the microcomputer 205 consumed power. It is also conceivable that the rectified voltage and the power supply voltage increase because of the wireless power feeding by the transmitter 100, except at the time of transmitting the data signals, and that the power receiving state proceeds in a preferable direction.

After acquiring the digital values of the power supply voltage and of the rectified voltage, the voltage acquisition module 20533 stores the acquired voltage values in the storage part 2052 at least temporarily. In addition, the voltage acquisition module 20533 may store the acquired voltage values in the storage part 2052 in association with the time at which the voltage values are acquired by using a timer (not shown). The time period during which the values are stored in the storage part 2052 is arbitrary, and the values may be stored continuously after the receiver 200 is installed and the operation of the microcomputer 205 is started. Also, the values may be erased when the power feeding is stopped and the receiver 200 is made to be in an inoperable state. Also, the values may be erased when the determination of the power receiving state is terminated by the power receiving state determination module 20534.

The power receiving state determination module 20534 compares the digital value of the rectified voltage which have been acquired by the voltage acquisition module 20533 with a predetermined threshold value set for the rectified voltage (that is, a first threshold value), and compares the digital value of the power supply voltage which have been acquired by the voltage acquisition module 20533 with a predetermined threshold value set for the power supply voltage (that is, a second threshold value). Then, the power receiving state determination module 20534 refers to the determination table 20522 stored in the storage part 2052, and determines the power receiving state of the receiver 200 based on the comparison results.

It is conceivable that the receiver 200 acquires only the digital values of the rectified voltage and of the power supply voltage, and transmits these digital values to the transmitter 100, and then the power receiving state of the receiver 200 is determined by at least one of the transmitter 100, the first information processing device 300 and the second information processing device 400. This configuration can be included in the WPT system 1 according to the present disclosure.

On the other hand, if the receiver 200 determines its own power receiving state, there are advantages that the receiver 200 can perform the operation control in a flexible and detailed manner, based on the determination result, and for example, the receiver 200 can change its own operation state (which will be described later). In addition, as illustrated in FIG. 1, when the transmitter 100 is configured to receive data from a plurality of receivers 200, and when the transmitter 100 or the like determines the power receiving states of the respective receivers 200, the computational load of the transmitter 100 or the like will increase. For the foregoing reasons, in the WPT system 1 according to the present disclosure, the determination of the power receiving state is mainly performed by the receiver 200.

The first threshold value and the second threshold value on which the determination of the power receiving state is carried out may be different with each other. For example, it is conceivable that the electric power management part 203 converts the voltage value of the output voltage of the rectifier circuit 202 and supplies the converted voltage value to the charger 204 and the microcomputer 205. Thus, the proper value of the rectified voltage which is the output value from the rectifier circuit 202 may be different from the proper value of the power supply voltage which is associated with the output value from the electric power management part 203. It is possible to appropriately determine the specific value of the first threshold value and that of the second threshold value according to the circuit configuration of the receiver 200. In this case, the standard values on a circuit design may be determined as followings. If the output voltage value from the rectifier circuit 202 is 5V, the first threshold value may be made to be a value slightly lower than 5V, and similarly, if the output voltage value from the electric power management part 203 is 3.3V, the second threshold value may be made to be a value slightly lower than 3.3V. In addition, the power supply voltage corresponds to the charging voltage to the charger 204 and it is also conceivable that the power supply voltage corresponds to the voltage of the operating power supply of the microcomputer 205. Accordingly, the second threshold value may be made to be at least one or both of the voltage value enabling the charger 204 to be charged and the voltage value enabling the microcomputer 205 to operate.

The first threshold value and the second threshold value are stored in the storage part 2052 of the microcomputer 205 in advance. It is also possible to update the first threshold value and the second threshold value based on the data transmitted from the transmitter 100.

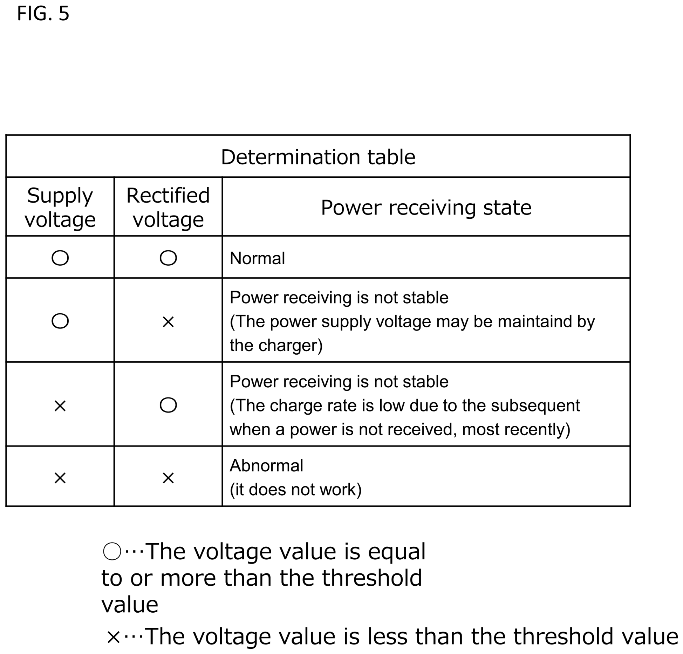

Next, one example of the determination table 20522 to be used by the power receiving state determination module 20534 will be described with referring to FIG. 5. In FIG. 5, one example of the determination table 20522 to be stored in the storage part 2052 of the microcomputer 205 is illustrated.

The comparison results between the power supply voltage and the second threshold value and the comparison results between the rectified voltage and the first threshold value are described in the determination table 20522 correlated with the determination results of the power receiving states of the receiver 200 based on these comparison results. In the example illustrated in FIG. 5, a mark "o" indicates that the voltage value is equal to or more that the first threshold value or the second threshold value, and a mark "×" indicates that the voltage value is less than the first threshold value or the second threshold value. Since there are two comparison results for the rectified voltage and two comparison results for the power supply voltage, there are four determination results for the power receiving state in total.

When at least one of the power supply voltage and the rectified voltage is less than the threshold value, the power receiving state determination module 20534 determines that the power receiving state is not stable.

Following are some concrete examples. In a case that the power supply voltage is "o" and the rectified voltage is "o", it is determined that the power receiving state is stable and normal.

Next, in a case that the power supply voltage is "o" and the rectified voltage is "×", it is estimated that power for operating the microcomputer 205 can be secured by the charger 204 at this time. However, since the rectified voltage is "×", it is estimated that the wireless power feeding from the transmitter 100 is not stable at this time, and accordingly, it is determined that the power supply voltage will be reduced sooner or later due to that the operation of the microcomputer 205 is continued.

Next, in a case that the power supply voltage is "×" and the rectified voltage is "∘", it is determined that, soon, power for operating the microcomputer 205 cannot be secured, due to that a period during which the wireless power feeding is not stable has continued immediately close to the determination time, and that the charging rate (SOC: State Of Charge) of the charger 204 is low.

And in a case that the power supply voltage is "×" and the rectified voltage is "×", it is determined that the whole receiver 200 cannot operate. However, when the power supply voltage is lower than the operable voltage of the microcomputer 205, the power receiving state determination module 20534 cannot perform its determination operation, and accordingly, the power supply voltage is assumed to be higher than the operable voltage of the microcomputer 205 even if both the power supply voltage and the rectified voltage are "×".

Subsequently, the power receiving state determination module 20534 transmits the determination result which has been carried out based on the determination table 20522 to the transmitter 100 or the like via the transmission control module 20532. The timing at which the determination result is transmitted is arbitrary. In one example, the determination result may be periodically transmitted in the same way as the timing at which the digital values of the rectified voltage and of the power supply voltage are acquired by the voltage acquisition module 20533. In another example, the determination result may be transmitted in accordance with the timing at which the physical quantities to be measured by the sensor are transmitted to the transmitter 100 or the like as the data signals, by the transmission control module 20532.

The method of transmitting the determination result by the power receiving state determination module 20534 is arbitrary. In one example, only two types of signals for indicating a "normal" and an "abnormality" (the "abnormality" includes both of a "state at which power reception is not stable" and an "abnormality") may be transmitted. In another example, three types of signals for indicating a "normal", a "state at which power reception is not stable" and an "abnormality" may be transmitted. In yet another example, four types of signals for indicating four patterns obtained from the power receiving state determination module 20534 may be transmitted (the four patterns are illustrated in FIG. 5).

### <1.5 Operation Example>

Hereinafter, an example of the operation of the microcomputer 205 will be described.

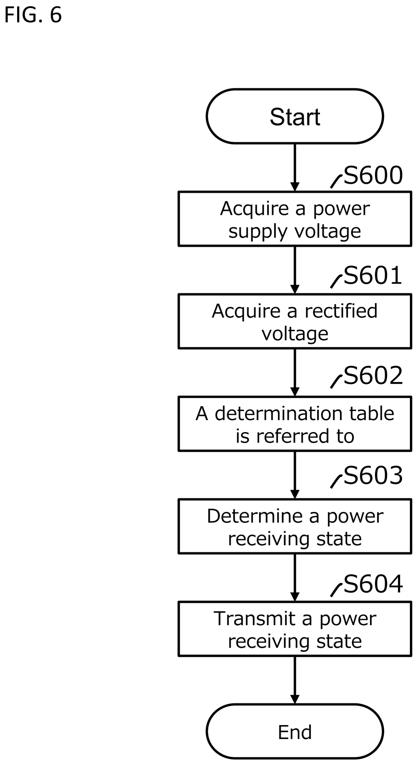

FIG. 6 shows a flowchart of one example of a main operation of the microcomputer 205.

The operation illustrated in the flowchart of FIG. 6 may be started in accordance with a timing at which the digital values of the power supply voltage and of the rectified voltage are acquired by the voltage acquisition module 20533. The operation order of the respective steps in the flowchart of FIG. 6 is not limited to that example illustrated in the figure, and the operation order may be changed as appropriate. For example, the order of acquiring the power supply voltage and the rectified voltage at steps S600 and S601 is not limited, and these voltages may be acquired asynchronously or simultaneously.

At the step S600 and step S601, the control part 2053 acquires the digital value of the power supply voltage and that of the rectified voltage from the A/D converter 2051. Specifically, for example, the control part 2053 acquires the digital value of the power supply voltage and that of the rectified voltage from the A/D converter 2051 by the voltage acquisition module 20533. The control part 2053 stores the acquired digital values of the power supply voltage and of the rectified voltage in the storage part 2052 at least temporarily.

Subsequently, at the step S602, the control part 2053 collates the voltage values of the power supply voltage and of the rectified voltage acquired in the steps S600, S601 with the determination table 20522. Specifically, for example, the control part 2053 causes the power receiving state determination module 20534 to collate the voltage values of the power supply voltage and of the rectified voltage acquired in the steps S600, S601 with the determination table 20522. The collating operation using the determination table 20522 at the step S602 does not need to be performed immediately after the steps S600, S601, and may be performed independently from the timing at which the voltages are acquired in the steps S600, S601. Similarly, the operations at the following steps S603, S604 do not need to be performed immediately after the steps S600, S601, and may be performed independently from the timing at which the voltages are acquired in the steps S600, S601.

Then, at the step S603, the control part 2053 determines the power receiving state of the receiver 200 based on the collation result carried out at the step S602. Specifically, for example, the control part 2053 causes the power receiving state determination module 20534 to determine the power receiving state of the receiver 200 based on the collation result in step S602.

Subsequently, at the step S604, the control part 2053 transmits the determination result obtained in the step S603 to the transmitter 100 or the like. Specifically, for example, the control part 2053 causes the power receiving state determination module 20534 and the transmission control module 20532 to transmit the determination result obtained at the step S603 to the transmitter 100 or the like.

### <1.6 Effects of One Embodiment>

As described above, according to the WPT system 1 of the present embodiment, it is possible to determine the power receiving state of the receiver 200 to which electric power is wirelessly supplied.

Specifically, in the configuration where the voltage values of the power supply voltage and of the rectified voltage are sequentially transmitted to the transmitter 100 or the like, the receiver 200 needs to frequently transmit the data to the transmitter 100 or the like, and accordingly, there is a high possibility that the receiver 200 consumes an enormous amount of power. Furthermore, when the transmitter 100 or the like receives the data transmitted from a plurality of receivers 200 as in the configuration illustrated in FIG. 1, there is a high possibility that the computational load of the transmitter 100 or the like increases.

According to the WPT system 1 of the present embodiment, the receiver 200 compares two types of threshold values (that is, the first threshold value and the second threshold value) with the voltage values of the power supply voltage and of the rectified voltage, and determines the power receiving state of the receiver 200 based on the comparison result. Therefore, it becomes possible to reduce the respective computational loads of the receiver 200 and of the transmitter 100. In addition, since each of the power supply voltage and the rectified voltage is compared with the threshold value, and the power receiving state of the receiver 200 is determined based on the respective comparison results, it becomes possible to determine the power receiving state of the receiver 200 in detail, with a high degree of accuracy.

Then, based on the determination of the power receiving state, the receiver 200 is able to notify the possibility that the state becomes an abnormal state before the power receiving state of the receiver 200 enters the abnormal state (at which both the power supply voltage and the rectified voltage become "×" in the determination table 20522 of FIG. 5), and as a result, the administrator of the WPT system 1, the first information processing device 300, and/or the second information processing device 400 is able to perform an appropriate management based on the notification. This management may include a process of increasing power to be fed from the transmitter 100 which is wirelessly feeding electric power to the receiver 200, and a process of changing the position of the transmitter 100 and the like, when the power receiving state of the receiver 200 is not stable.

The determination result of the receiver 200 may be acquired at the timing when the WPT system 1 is constructed, that is, when the transmitter 100 and the receiver 200 are actually arranged, such that the number and the arrangement of the transmitters 100 and those of the receivers 200 are optimized based on the determination result.

In one practical example, when the receiver 200 is provided with a sensor, a proper position of the sensor can be determined to some extent with respect to the installation space. Therefore, when the receiver 200 is arranged, and the number and the arrangement of the transmitters 100 are examined and optimized, there is a big advantage that power can be wirelessly transmitted properly to the receivers 200.

In addition, even if the manufacturer of the transmitter 100 and the manufacturer of the receiver 200 are different, the power receiving state of the receiver 200 can be appropriately determined regardless of the configuration of the transmitter 100, and thus the connectability during operations can be secured and guaranteed. In other words, the WPT system 1 that is not the best effort type can be configured.

In addition, according to the determination result of the power receiving state of the receiver 200, especially when the power supply voltage is equal to or less than the threshold value, the microcomputer 205 may cause the receiver 200 to function in the power saving mode. That is, when the power supply voltage is equal to or less than the threshold value, there is a high possibility that it becomes difficult to continue the operation of the microcomputer 205 or the like, and therefore, it is preferable to operate the receiver 200 in the power saving mode. In one example of the power saving mode, an interval of transmitting the detection result of a sensor to the transmitter 100 or the like is prolonged. In another example, an interval of flashing a lighting device (for example, a LED for indicating that the receiver 200 is operating) is prolonged. In yet another example, when the microcomputer 205 is provided with a low power consumption mode, the microcomputer 205 is shifted to this low power consumption mode. The threshold value for determining the shift (or transition) to the power saving mode may be a value different from the second threshold value.

### < 1.7 Modifications>

In the WPT system 1 of the present embodiment described above, the microcomputer 205 of the receiver 200 is configured to have the A/D converter 2051. However, in the WPT system 1 of the present embodiment, the configuration for acquiring the digital values of the power supply voltage and of the rectified voltage is not limited to this embodiment. In one example, a comparator for performing a comparison between the voltage values and the first and second threshold values may be arranged at an input pre-stage of the microcomputer 205 such that the output values of the comparator are inputted to the microcomputer 205. In this case, the A/D converter 2051 does not need to be provided because the output values of the comparator can be digital values. Alternatively, it is also possible to use a reset IC instead of the comparator.

As described above, a configuration in which the calculation operation for performing the comparison between the first threshold value and the rectified voltage and the comparison between the second threshold value and the power supply voltage is not performed by the internal processing of the microcomputer 205 is also sufficiently possible.

In addition, in the WPT system 1 of the present embodiment described above, the comparison between the first threshold value and the rectified voltage and the comparison between the second threshold value and the power supply voltage are performed, but these first and second threshold values may respectively have a plurality of threshold values. That is, with respect to each of the first threshold value and the second threshold value, the voltage value has a plurality of different threshold values to determine the power receiving state in detail as followings:
to determine whether the rectified voltage is equal to or less than any one of the threshold values constituting the first threshold value, and whether the power supply voltage is equal to or less than any one of the threshold values constituting the second threshold value, or
to determine whether the rectified voltage is less than any one of the threshold values constituting the first threshold value, and whether the power supply voltage is less than any one of the threshold values constituting the second threshold value.

### <2. Second Embodiment>

In the WPT system 1 of the first embodiment described above, the comparison between the first threshold value and the rectified voltage and the comparison between the second threshold value and the power supply voltage are performed. In the WPT system 1 according to a second embodiment, the power receiving state of the receiver 200 is determined in more detail based on changes over time with respect to the power supply voltage, the rectified voltage, and the first and second threshold values.

The feature points of the WPT system 1 according to the second embodiment are summarized below.
· At least the first threshold value includes a plurality of threshold values. More precisely, a plurality of spaces (or ranges) are provided by a plurality of threshold values, with respect to at least the first threshold value, so that the determination is performed to decide whether there is a space (or range) to which the voltage belongs.
· A state of a change over time of at least either the power supply voltage or the rectified voltage is classified, and the state of the change over time is used for determining a state for receiving power (or, a power receiving state).

Thus, in the WPT system 1 of the present embodiment, the power receiving state of the receiver 200 is determined based on the range to which at least either the power supply voltage or the rectified voltage belongs and on the state of the change over time of at least either the power supply voltage or the rectified voltage.

Hereinafter, one example will be described in which the second threshold value is composed of a plurality of threshold values, with respect to the power supply voltage, and the determination is performed to decide a space (or range) to which the power supply voltage belongs, and to examine a state of a change over time of the power supply voltage. Then, the power receiving state of the receiver 200 is determined based on the range to which the power supply voltage belongs and on the state of the change over time of the power supply voltage. Of course, the determination can be performed to examine a space (or range) to which the rectified voltage belongs, and to examine a state of a change over time of the rectified voltage, and then the power receiving state of the receiver 200 can be determined as in the case of the first embodiment described above.

In this case, in the WPT system 1 of the present embodiment, a plurality of threshold values constituting the first threshold value are stored in the storage part 2052, and the determination of which range the power supply voltage belongs to and the determination of the state of the change over time of the power supply voltage are performed by the power receiving state determination module 20534 of the control part 2053.

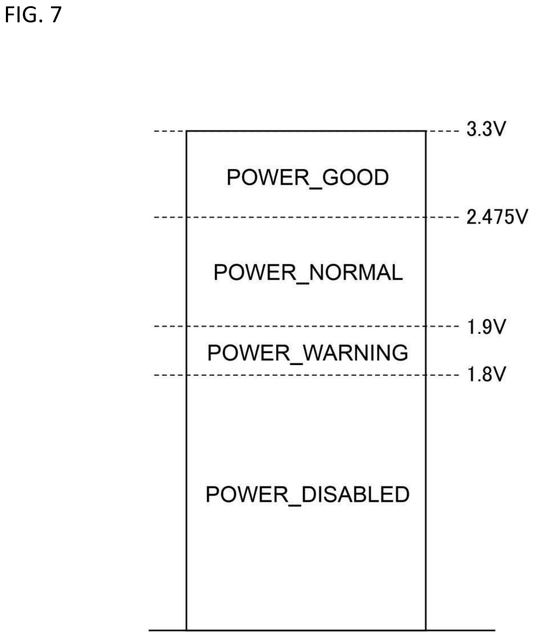

FIG. 7 is a diagram illustrating a plurality of threshold values constituting the first threshold value to be used in the WPT system 1 according to the present embodiment, and also illustrating a plurality of ranges defined by these threshold values with respect to the power supply voltage.

In the WPT system 1 of the present embodiment, the first threshold value is composed of four threshold values (3.3V, 2.475V, 1.9V, 1.8V), and ranges are formed between these threshold values such as "POWER_GOOD", "POWER_NORMAL", "POWER_WARNING", and "POWER_DISABLED", in descending order of the voltage values. These ranges are defined as followings:
· POWER_GOOD... the power supply voltage is in a good (or preferable) state (that is, the charging voltage of the charger 204 and the operating voltage of the microcomputer 205 can be sufficiently secured),
· POWER_NORMAL... the power supply voltage is in a normal state (that is, there is no problem in the charging voltage of the charger 204 and the operating voltage of the microcomputer 205),
· POWER_WARNING... the power supply voltage is in a cautious state (that is, there is a possibility that the charging voltage of the charger 204 and the operating voltage of the microcomputer 205 may not be secured),
· POWER_DISABLED... the power supply voltage is in a critical state (that is, the charging voltage of the charger 204 and the operating voltage of the microcomputer 205 cannot be secured).

When the power supply voltage is in the "POWER_DISABLED" range, the microcomputer 205 is not able to operate (or it is equal to or less than the operable voltage), and therefore it is difficult for the power receiving state determination module 20534 to determine that the power supply voltage is in the "POWER_DISABLED" range. Therefore, it is possible to exclude the determination to classify that it is in the "POWER_DISABLED" range, as the algorithm for determining the power receiving state.

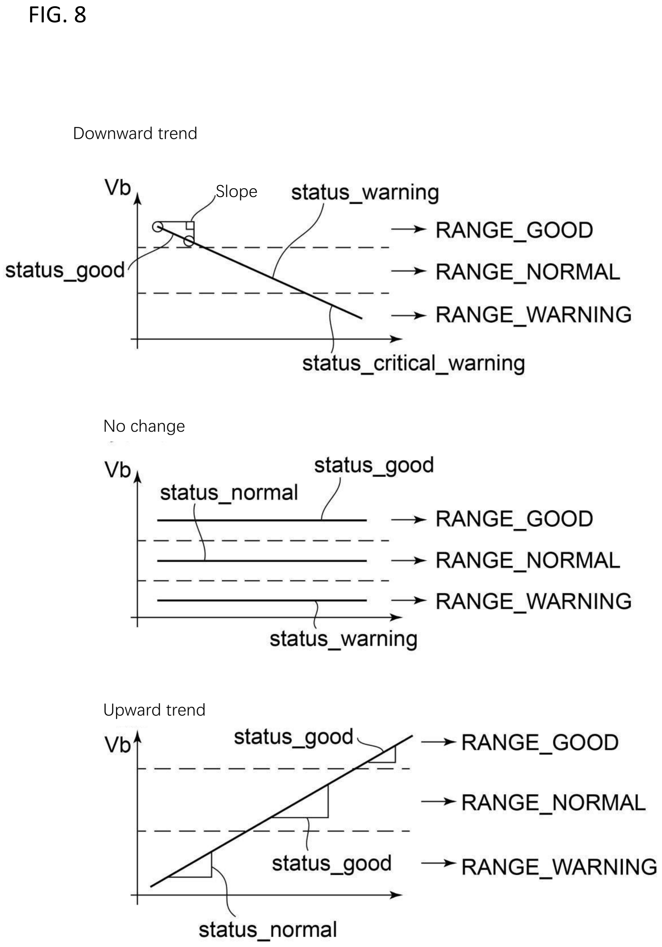

FIG. 8 shows a diagram giving an explanation of the state of the change over time of the power supply voltage used in the WPT system 1 according to the present embodiment.

In the WPT system 1 of the present embodiment, the state of the change over time of the power supply voltage is classified into three types. These three states are defined as follows:
(1) Decrease (trend): SLOPE_DESCEND
(2) No change: SLOPE_STABLE
(3) Increased: SLOPE:ASCENT

In the example illustrated in FIG. 8, each "RANGE_" indicates an abbreviated form of the corresponding range illustrated in FIG. 7, in which "POWER _" is omitted.

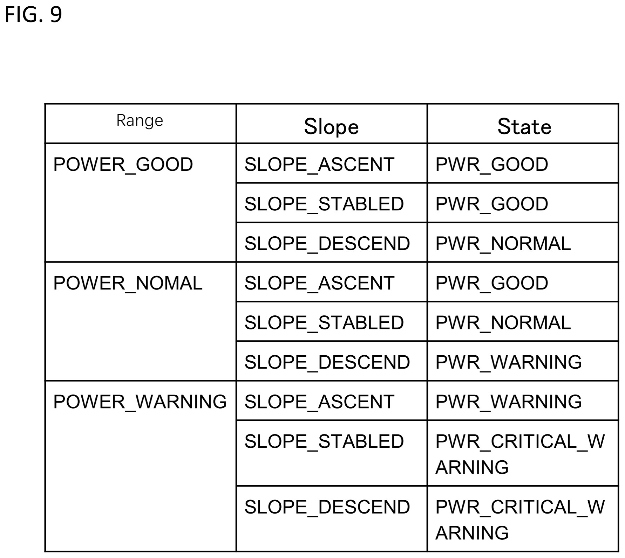

FIG. 9 is a diagram illustrating a determination table 20522 used in the WPT system 1 according to the present embodiment. In the WPT system 1 of the present embodiment, the determination result (STATE) of the power receiving state of the receiver 200 are determined based on the range (RANGE) to which the power supply voltage currently belongs and the state (SLOPE) of the change over time of the power supply voltage, which have been defined in FIGS. 7 and 8.

In the determination table 20522 illustrated in FIG.9, the determination results are defined as follows:
· PWR_GOOD: The power receiving state is good (or preferable),
· PWR_NORMAL: The power receiving state is normal,
· PWR _WARNING: The power receiving state is not stable,
· PWR_CRITICAL_WARNING : The power receiving state is critical such that it is difficult to continue the operation of the receiver 200 (some kinds of dying messages).

As illustrated in FIG. 9, in the WPT system 1 of the present embodiment, the power receiving state of the receiver 200 is determined with respect to not only the range to which the power supply voltage currently belongs but also the state of the change over time of the power supply voltage. For example, when the SLOPE is the "SLOPE:ASCENT", even when the RANGE is the "POWER_WARNING", the power supply voltage is on the upward trend, and as a result, the power receiving state of the receiver 200 is not determined as the "PWR_CRITICAL_WARNING" immediately, and it is predicted that the power receiving state will be improved in the future, and thus the power receiving state is determined as the "PWR_WARNING".

Therefore, according to the WPT system 1 of the present embodiment, the power receiving state of the receiver 200 is determined considering the state of the change over time of the power supply voltage. As a result, it is possible to determine the power receiving state of the receiver 200 more finely such that the power receiving state of the receiver 200 in the future can be determined, and accordingly, the determination accuracy of the power receiving state can be further improved.

The specific numerical values, ranges, the number of the threshold values, and the number of the state of the change over time of the power supply voltage illustrated in FIG. 7 can be arbitrarily set. Also, the combination of the determination results is not limited to the example illustrated in FIG. 9.

### <2.1 Modifications>

In the WPT system 1 of the present embodiment described above, the power receiving state of the receiver 200 is determined by dividing the states of the change over time of the power supply voltage into three types, but the state of the change over time of the power supply voltage may be classified in a more complicated manner. In one example, it is possible to acquire the power supply voltage periodically, and to put all the acquired power supply voltages onto a graph in which the time axis is made to be the horizontal axis and the values of the power supply voltage are placed on the vertical axis, and then the put points are calculated by the primary approximate expression by using a procedure such as the least square approximation or the correlation coefficient calculation, and once the slope of a straight line is obtained by performing the primary approximate expression, the slope can be used for determining the power receiving state of the receiver 200.

Further, the power receiving state of the receiver 200 may be determined considering an instantaneous change in the rectified voltage. This is because that when a person crosses between the receiver 200 and the transmitter 100 in a space in which the receiver 200 is installed, the rectified voltage drops instantaneously, and immediately after that, it recovers. Therefore, even if there is such an instantaneous change in the rectified voltage, it is preferable to perform the determination such that the determination of the power receiving state of the receiver 200 is not affected by that instantaneous change.

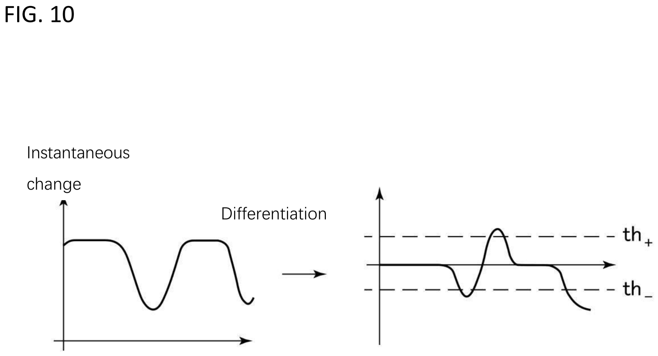

Therefore, as illustrated in FIG. 10, the power receiving state determination module 20534 of the receiver 200 is capable of determining the power receiving state of the receiver 200 by monitoring a change in the rectified voltage by differentiating the rectified voltage, by counting the number of times when the differential value (absolute value) exceeds predetermined threshold values (th₊, th-), and by determining how many times the above-mentioned number of times reaches the predetermined threshold value in a predetermined time (for example, 1 second). In one example, if the number of times is less than 3 in 10 seconds, it is determined that the power receiving state is stable, and if the number of times is 3 or more in 10 seconds. it is determined that the power receiving state is not stable.

### <3. Third Embodiment>

In the WPT system 1 of the above-described embodiments, the determination of the power receiving state is performed after the charger 204 is sufficiently charged and the microcomputer 205 starts the operation. In the WPT system 1 of the present embodiment, the power receiving state of the receiver 200 is determined immediately after the microcomputer 205 starts the operation.

In one example of the WPT system 1 of the present embodiment, the microcomputer 205 does not operate when the charger 204 is not charged at all (or the charger 204 is insufficiently charged). And when the charger 204 is charged to such an extent that the operable voltage of the microcomputer 205 or the like can be secured, and when the microcomputer 205 is reset by a reset IC (not shown), the microcomputer 205 starts the operation using the reset IC as a trigger.

When starting from a state where the power supply voltage is almost zero, the microcomputer 205 or the like is disconnected because it is a post-stage circuit, and therefore the power consumption of the whole circuit of the receiver 200 is very low. In such cases, often, the power consumption reaches the state for starting the microcomputer 205. However, after that, if the balance of supply and demand is not maintained between the wireless power feeding and the power consumption of the microcomputer 205 or the like, the power supply voltage gradually decreases. It is possible to perceive this trend as a slope after the power-on operation of the circuit of the microcomputer 205 or the like is performed, and eventually, it is possible to predict that the microcomputer 205 or the like will be positively stopped.

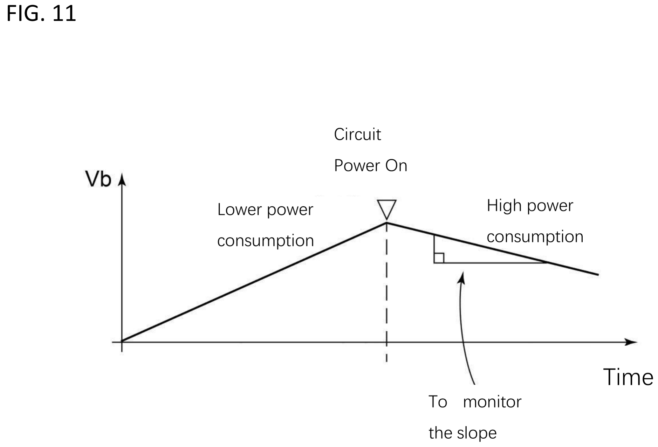

For example, as illustrated in FIG. 11, it is possible to predict that the power supply voltage steadily increases until the operation of the circuit (microcomputer 205 or the like) starts (in the range of "Low Power Consumption" in the figure). Further, it is also possible to predict that the power supply voltage decreases after the operation of the microcomputer 205 or the like starts (in the range of "High Power Consumption" in the figure).

For this reason, a state is provided for monitoring a trend of the power supply voltage after the microcomputer 205 or the like starts up, as the operation state of the microcomputer 205. Then, in a case when the power supply voltage decreases, the operation is stopped by determining that the continuation of the operation of the microcomputer 205 or the like is difficult. Also, in a case when the power supply voltage is maintained, the operation is stopped by determining that the continuation of the operation of the microcomputer 205 or the like is difficult (because the power consumption of the steady operating state is higher than that of the monitoring state). Then, only in a case when the power supply voltage increases, the operation is started by determining that it is OK.

At this time, the rising rate (slope) of the power supply voltage is monitored, and also whether the rising rate is sufficient for the subsequent circuit operation is monitored. In a case when it is determined that the rising rate is sufficient, the process proceeds to the next state.

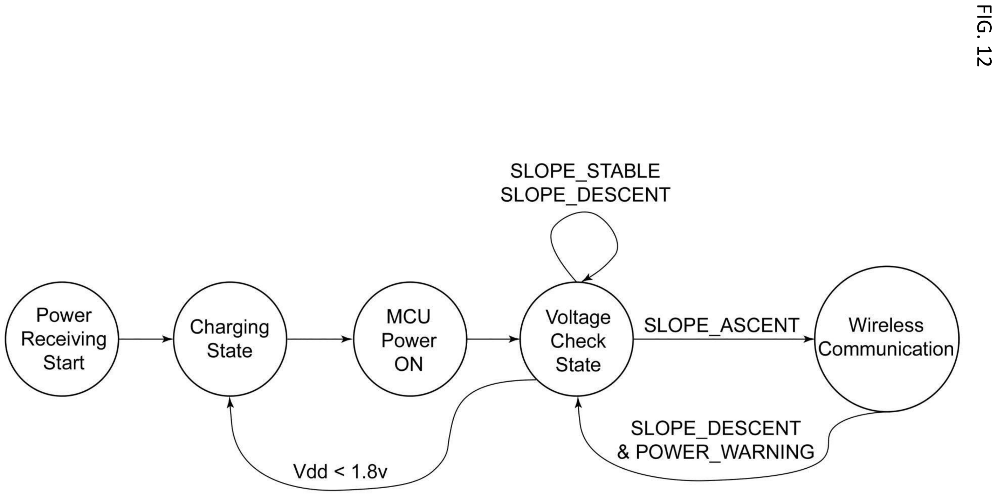

FIG. 12 is a state transition diagram illustrating a state transition of a hardware of the receiver 200 based on the power supply voltage. The state transition diagram illustrated in FIG. 12 is based only on the power supply voltage, and does not necessarily indicate the whole state of the receiver 200.

In FIG. 12, at the "Power Receiving Start" state, the receiver 200 starts to receive power when power is fed wirelessly. At this point, the power supply voltage of the charger 204 is low (for example, in a range of from 0V to 2.457V), and power is not fed to the microcomputer 205.

Subsequently, at the "Charging State", the charger 204 of the receiver 200 is charged with the rectified voltage. This state corresponds to a period until the microcomputer 205 starts up by a reset signal from the reset IC. Therefore, at this state, the microcomputer 205 does not operate.

Subsequently, at the "MCU Power ON" state, when the power supply voltage exceeds the threshold value of the reset IC, the microcomputer 205 starts up by the reset signal from the reset IC.

Subsequently, when the microcomputer 205 starts up, it enters the "Voltage Check State", at the beginning. When at the "Voltage Check State", the microcomputer 205 monitors a change over time of the power supply voltage and determines whether to shift to the steady operating state (that is, Wireless Communication). The parameters of the transition condition for determining a shift to each state illustrated in FIG. 12 are the same as those of the WPT system 1 according to the second embodiment described above, and it enters the steady operating state only in a case when the power supply voltage is on the upward trend (SLOPE_ASCENT).

Then, at the "Wireless Communication" state, because the receiver 200 is in the steady operating state, the power supply voltage is on the downward trend, and the power supply voltage is the "POWER_NORMAL", and accordingly, if the power receiving state is determined as the "PWR_WARNING" (see FIG. 9), it enters the "Voltage Check State".

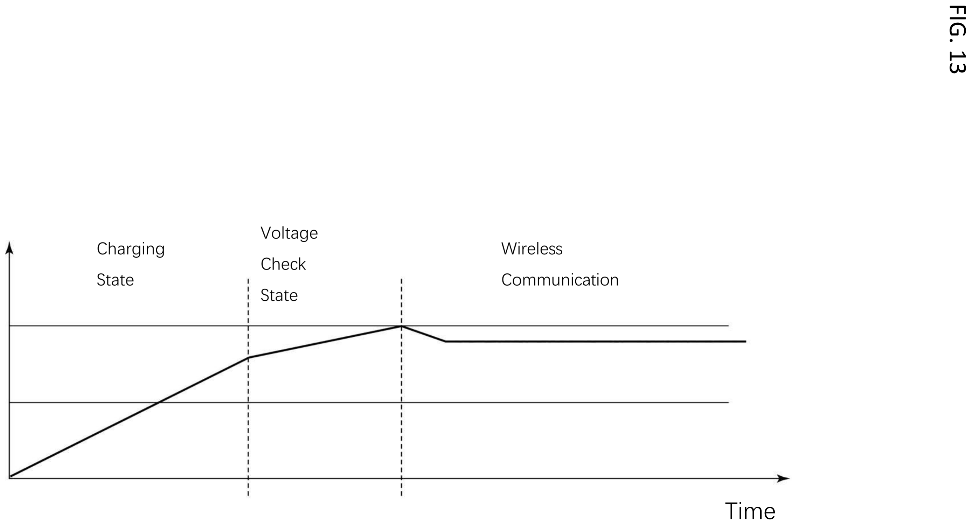

FIG. 13 is a diagram showing the time-series data of the power supply voltage when at the most normal operation mode in the state transition diagram illustrated in FIG. 12.

When at the "Charging State", the power supply of the microcomputer 205 is disconnected by the reset IC. At this state, the charger 204 is charged, and as a result, the power supply voltage increases. Since the microcomputer 205 is not supplied with power, the microcomputer 205 is not able to actually measure the power supply voltage.

When the power supply voltage reaches a predetermined value (for example, 2.475V) at which the reset IC outputs a reset signal, the operation of the microcomputer 205 is started by the reset signal outputted from the reset IC, and the microcomputer 205 enters the "Voltage Check State". When at this state, the microcomputer 205 monitors a change over time of the power supply voltage, and confirms whether the power supply voltage is on the upward trend (SLOPE_ASCENT). When at the "Voltage Check State", the microcomputer 205 monitors only the power supply voltage, and does not allow a post-stage circuit of the microcomputer 205 to operate (for example, the radio communication function). If the power supply is not on the upward trend in the "Voltage Check State", it is assumed that the receiver 200 (including the microcomputer 205) is not capable of continuing the operation at the steady operating state (Wireless Communication).

When it is determined that the power receiving state is normal at the "Voltage Check State", in other words, when it is determined that the power supply voltage is on the upward trend (SLOPE_ASCENT) , the microcomputer 205 enters the steady operating state (Wireless Communication).

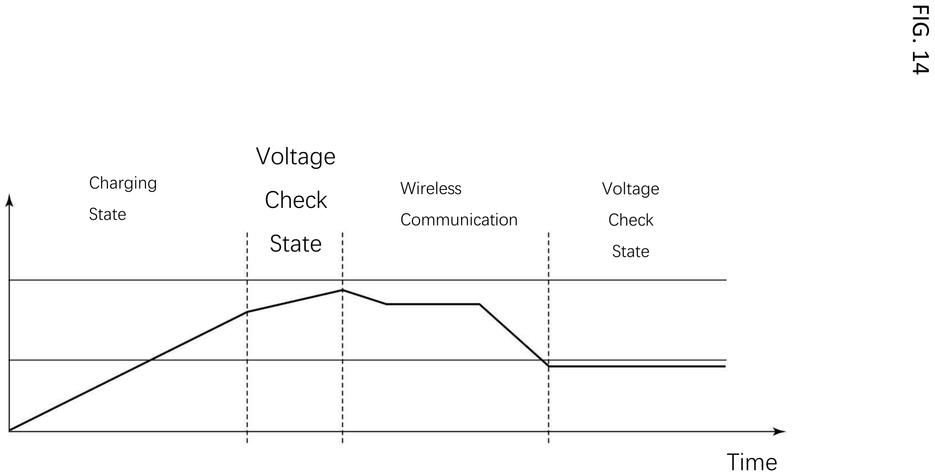

FIG. 14 is a diagram showing the time-series data of the power supply voltage when the power receiving state of the receiver 200 is not preferable (or good) in the state transition diagram illustrated in FIG. 12.

In the example illustrated in FIG. 14, when the power receiving state is good at the "Voltage Check State", it is shifted to the steady operating state (Wireless Communication). However, the power receiving state is deteriorated in some state and then the power supply voltage is lowered. The microcomputer 205 monitors the state of the power supply voltage at regular intervals even after shifted to the steady operating state (Wireless Communication). When the power supply voltage is on the downward trend, and when it is determined that the power receiving state is at the "PWR_WARNING" caused by that the power supply voltage is in the "POWER_NORMAL" range, the microcomputer 205 determines that it is not able to continue the steady operating state (Wireless Communication), and returns to the "Voltage Check State". Then, until it is determined that the power receiving state is normal at the "Voltage Check State", the state does not return to the steady operating state, again.

The above-described state transition operation may be performed not only by the microcomputer 205 but also by the electric power management part 203. That is, when at the "Charging State", the microcomputer 205 is not operating and thus the electric power management part 203 may monitor the power supply voltage and determine the transition (or shift) to the "Voltage Check State".

Therefore, in the WPT system 1 of the present embodiment, it is possible to determine the power receiving state of the receiver 200 even immediately after the receiver 200 starts the power receiving operation, and accordingly, the power receiving condition can be more finely determined.

### <4. Fourth Embodiment>

In the WPT system 1 of the present embodiment, the power receiving state of the receiver 200 is determined by using the change over time of the power supply voltage and the state of the rectified voltage (whether it is equal to or more than the first threshold value).

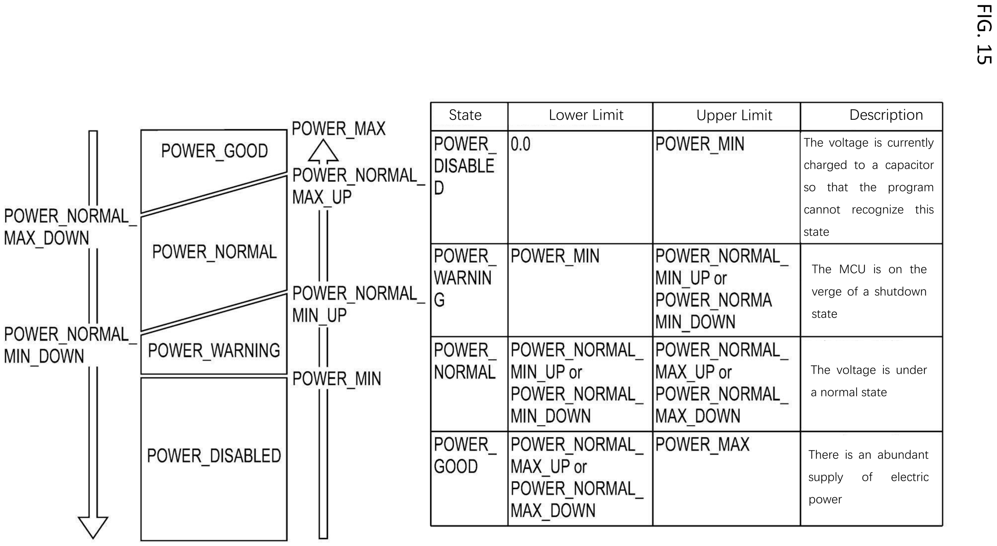

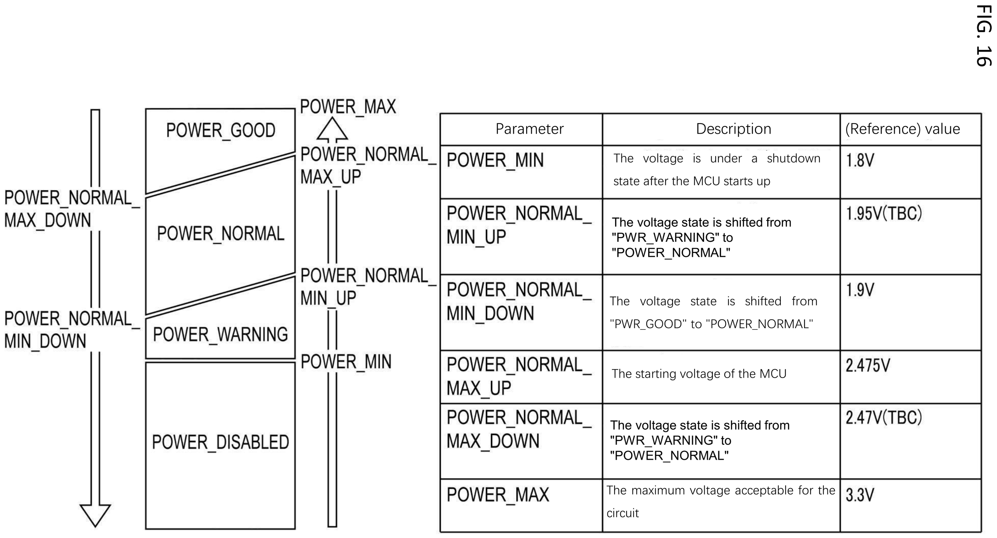

FIG. 15 is a diagram illustrating a plurality of ranges of power supply voltage to be defined by a plurality of threshold values included in the second threshold value for the power supply voltage in the WPT system 1 according to the present embodiment. FIG. 15 is similar to FIG. 8 of the second embodiment, but the voltage values corresponding to the threshold values are changed according to a change over time of the power supply voltage in the WPT system 1 of the present embodiment. The voltage values corresponding to specific threshold values will be described with referring to FIG. 16.

FIG. 16 is a diagram illustrating the threshold values of the power supply voltage in the WPT system 1 according to the present embodiment. These voltage values corresponding to the threshold values are illustrated as one example, and the present invention is not limited to the voltage values illustrated in FIG. 16.

In FIG. 16, it is illustrated that as the threshold value for regulating a boundary between the "POWER_WARNING" and the "POWER_NORMAL" among the threshold values indicating the ranges of the power supply voltage, the "POWER_NORMAL_MIN_UP" is used when the power supply voltage is on the upward trend, and the "POWER_NORMAL_MIN_DOWN" is used when the power supply voltage is on the downward trend, Similarly, as the threshold value for regulating a boundary between the "POWER_NORMAL" and the "POWER_GOOD", the "POWER_NORMAL_MAX_UP" is used when the power supply voltage is on the upward trend, and the "POWER_NORMAL_MAX_DOWN" is used when the power supply voltage is on the downward trend. In this example, the "POWER_MAX" refers to the maximum power supply voltage acceptable for the circuit of the receiver 200. Also, the MCU refers to the microcomputer 205.

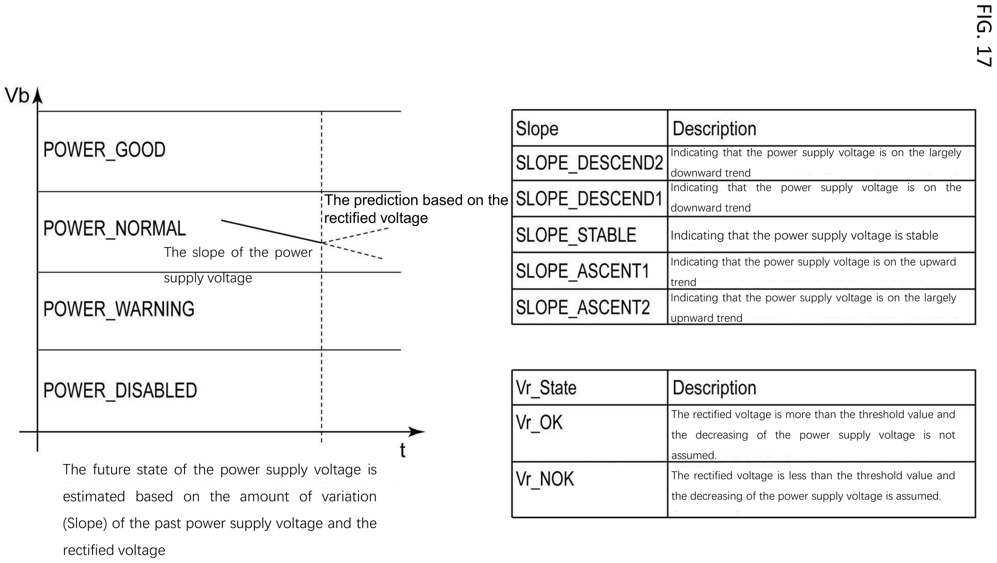

FIG. 17 is a diagram illustrating the definitions for the state of the change over time of the power supply voltage and for the state of the rectified voltage. With respect to the power supply voltage, similar to the case of the WPT system 1 according to the second embodiment described above, the states are classified depending on whether the power supply voltage is on the upward trend or on the downward trend. However, in the WPT system 1 according to the present embodiment, the upward trend of the power supply voltage is further classified into two stages, and the downward trend of the power supply voltage is further classified into two stages. Thus, these threshold values are provided for the slopes of the upward trend and downward trend of the power supply voltage such that the definition of the state is changed depending on whether there is an upward trend or downward trend of the power supply voltage exceeding this threshold value. The threshold value relating to the slope of the upward trend of the power supply voltage can be arbitrarily set.

With respect to the rectified voltage, the determination is performed as to whether the rectified voltage exceeds the first threshold value or falls below the first threshold value as in the case of the WPT system 1 of the first embodiment. It is possible to estimate a state of a future power supply voltage by determining the power receiving state of the receiver 200 based on both the upward trend/downward trend of the power supply voltage and the large/small relationship between the rectified voltage and the first threshold value. In one example, when the rectified voltage exceeds the first threshold value and when the power supply voltage is on the downward trend, it is possible to determine that the power supply voltage will be restored after that, and the current downward trend will not continue (in other words, a drop in the power supply voltage is not expected in the future).

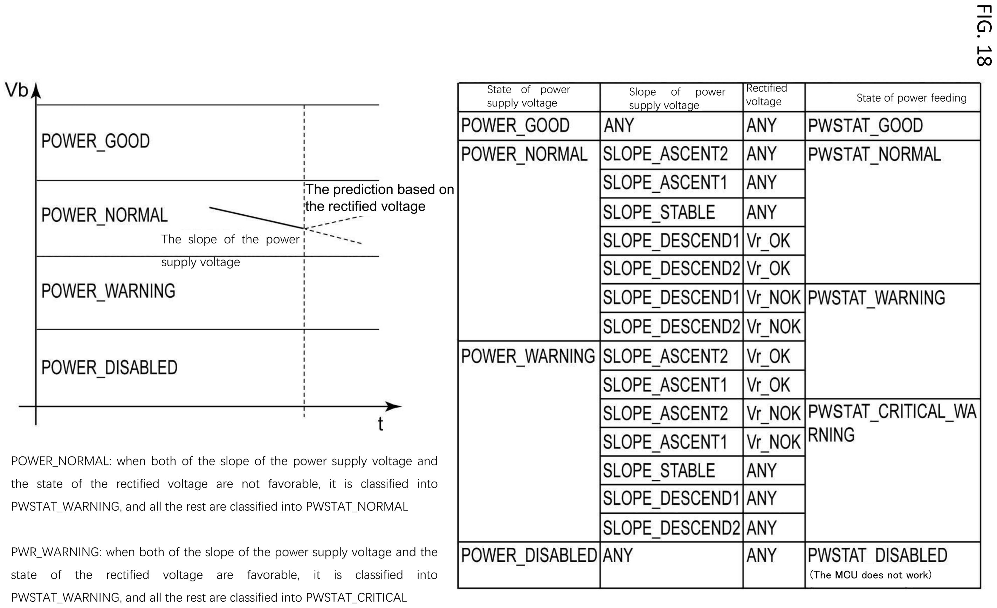

FIG. 18 is a diagram illustrating an example of a determination table 20522 for determining the power receiving state of the receiver 200 in the WPT system 1 of the present embodiment. Even when the state of the power supply voltage is in the "POWER_NORMAL" range, the eventual determination of the power receiving state (power feeding state) is made to be different depending on the relationship of the upward trend/downward trend of the power supply voltage and the threshold value of the rectified voltage. Similarly, even when the state of the power supply voltage is in the "POWER_WARNING" range, the eventual determination of the power receiving state (power feeding state) is made to be different depending on the relationship of the upward trend/downward trend of the power supply voltage and the threshold value of the rectified voltage.

Therefore, in the WPT system 1 of the present embodiment, the power receiving state of the receiver 200 is determined considering the state of the change over time of the power supply voltage and the relationship between the rectified voltage and the threshold value. As a result, it becomes possible to more finely determine the power receiving state of the receiver 200, and to perform the determination of the power receiving state of the receiver 200 in the future. Accordingly, the accuracy of the determination of the power receiving state can be further improved.

The specific numerical values and ranges of the threshold values illustrated in FIG. 16 can be arbitrarily set. In addition, the combination of the determination results is not limited to the example illustrated in FIG. 18.

### <5 Additional Remarks>

The above-described embodiments have been described in detail to provide an explanation easier to be understood when read by a human being, and are not necessarily limited to those having all the described configurations. In addition, it is possible to add, delete, or replace a part of a configuration with another configuration, for each embodiment.

As one example, in each of the above-described embodiments, the receiver 200 is configured to mainly perform the determination of the power receiving state of the receiver, but it is also possible to configure the receiver 200 to transmit the values (digital values) of the rectified voltage and of the power supply voltage as signals to the transmitter 100 and the first information processing device 300, and to configure the transmitter 100 and the first information processing device 300 to perform the determination of the power receiving state of the receiver 200 based on the values such as the rectified voltage transmitted from the receiver 200. That is, in the example illustrated in FIG. 4, it is possible to configure the transmitter 100 and/or the first information processing device 300 to be provided with the power receiving state determination module 20534, and to configure the transmission control module 20532 to transmit the rectified voltage and the power supply voltage, each of which is acquired by the voltage acquisition module 20533, to the transmitter 100 and/or the first information processing device 300

In the above-described embodiments, the configurations for wirelessly transmitting a transmission power consisting of AC signals from the transmitter to the receiver (in other words, so-called WPT system 1) have been explained. However, it is also possible to apply a system to feed electric power to the receiver 200 by other methods. Since such a system is known, a detailed description thereof will be omitted, but as examples, a system for transmitting electric power generated by photovoltaic power generation device to the receiver 200 (regardless wired or wireless) and a system for transmitting electric power by laser light to the receiver 200 (regardless wired or wireless) can be cited. In addition, it is also applicable that sounds or vibrations are made to be transmitted to the receiver 200 and the receiver 200 is configured to convert such power (vibrations or the like) to electric power. Further, known other systems different from the one for wirelessly receiving transmitting power consisting of AC signals are also applicable, and for example, known contactless power feeding techniques such as systems for contactlessly feeding electric power by using a magnetic field coupling method are also applicable.

In addition, some or all of the above-described configurations, functions, processing parts, processing means, and the like may be realized by a hardware, for example, by designing them with an integrated circuit. In addition, the present invention may also be realized by program codes of a software capable of realizing the functions of the embodiments. In such cases, a computer is provided with a storage medium in which the program codes are recorded such that the program code stored in the storage medium are made to be read by a processor included in the computer. When the program codes are read from the storage medium, the program codes themselves realize the functions of the above-described embodiments. Hence, it is conceivable that the program codes and the storage medium storing the program codes can constitute the present invention. As examples of the storage medium for providing such program codes, a flexible disk, a CD-ROM, a DVD-ROM, a hard disk, an SSD, an optical disk, a magneto-optical disk, a CD-R, a magnetic tape, a nonvolatile memory card, and a ROM can be cited.

Also, the program codes for realizing the functions described in the present embodiments can be implemented by various kinds of programs or scripting languages, such as the assembler, C/C++, perl, Shell, PHP, and Java (registered trademark).

Further, it is possible to distribute the program codes of a software for realizing the functions of the present embodiments may be distributed through a network such that the program codes are stored in a storage means (for example, a hard disk or a memory of a computer or a storage medium such as a CD-RW, a CD-R) to make a program to read and execute the program codes stored in the storage means or the storage medium.

The configurations which have been described in the above-mentioned embodiments are as below.

### [Configuration 1]

A receiver (200) for wirelessly receiving transmitting power composed of AC signals is provided, and the receiver (200) includes:
a processor (205);
a rectifier (202) for rectifying the transmitting power;
an electric power management part (203) for managing a rectified voltage from the rectifier (205); and
a charger (204) to be electrically charged with an output voltage from the electric power management part (203).

In addition, the processor (205) is configured to execute:
a first step (S600, S601) of detecting the rectified voltage and a power supply voltage which is a charging voltage of the charger (204);
a second step (S602) of comparing the rectified voltage detected in the first step (S600, S601) with a first threshold value prescribed for the rectified voltage, and comparing the power supply voltage detected in the first step (S600, S601) with a second threshold value prescribed for the power supply voltage; and
a third step (S603) of determining a power receiving state of the receiver (200) based on at least one of the comparison results in the second step (S602).

### [Configuration 2]

A receiver (200) for wirelessly receiving transmitting power composed of AC signals is provided ,and the receiver (200) includes:
a processor (205);
a rectifier (202) for rectifying the transmitting power;
an electric power management part (203) for managing a rectified voltage from the rectifier (202); and
a charger (204) to be electrically charged with an output voltage from the electric power management part (203).

In addition, the processor (205) is configured to execute:
a first step (S600, S601) of detecting the rectified voltage and a power supply voltage which is a charging voltage of the charger;
a second step (S602) of comparing the rectified voltage detected in the first step (S600, S601) with a first threshold value prescribed for the rectified voltage, and comparing the power supply voltage detected in the first step (S600, S601) with a second threshold value prescribed for the power supply voltage; and
a third step (S603) of determining a power receiving state of the receiver (200) based on at least one of the comparison results in the second step.

Further, in the third step (S603), the power receiving state of the receiver (200) is determined based on a determination table (20522) in which a determination of the power receiving state of the receiver (200) is prescribed with respect to the respective comparison results of:
whether the detected rectified voltage is less than the first threshold value prescribed for the rectified voltage; and
whether the detected power supply voltage is less than the second threshold value prescribed for the power supply voltage.

### [Configuration 3]

The receiver according to configuration 1 or 2, wherein, in the third step (S603), the power receiving state of the receiver (200) is determined based on:
whether the rectified voltage detected in the first step (S600, S601) is less than or equal to, or less than, the first threshold value; or
whether the power supply voltage detected in the first step (S600, S601) is less than or equal to, or less than, the second threshold value.

### [Configuration 4]

The receiver (200) according to any one of configurations 1 to 3, wherein, in the third step (S603), the power receiving state of the receiver (200) is determined based on both of the comparison results in the second step (S602).

### [Configuration 5]

The receiver according to any one of configurations 1 to 4, wherein, in the third step (S603), the power receiving state of the receiver is determined based on a determination table (20522) in which a determination that the power receiving state of the receiver is normal, abnormal, or another state is prescribed with respect to:
the comparison result of the rectified voltage with the first threshold value; and
the comparison result of the power supply voltage with the second threshold value.

### [Configuration 6]

The receiver (200) according to any one of configurations 1 to 5, wherein the first threshold value and the second threshold value are different voltage values.

### [Configuration 7]

The receiver (200) according to configuration 1, wherein at least one of the first threshold value or the second threshold value includes a plurality of different threshold values.

### [Configuration 8]

The receiver (200) according to any one of configurations 1 to 7, wherein the processor (205) further executes a fourth step of determining an operation state of the processor (205) based on a change over time of the power supply voltage following activation of the processor (205).

### [Configuration 9]

The receiver according to any one of configurations 1 to 8, wherein the processor (205) further executes a fifth step (S604) of transmitting, to outside of the receiver, a signal representing a determination result of the power receiving state of the receiver (200) determined in the third step (S603).

### [Configuration 10]

The receiver according to configuration 9, wherein the receiver (200) is provided with a sensor device capable of measuring a predetermined physical quantity, and
wherein, in the fifth step (S604), a signal representing a determination result of the power receiving state of the receiver (200) determined in the third step (S603) is transmitted to outside of the receiver (200) at a timing of transmitting a signal representing the physical quantity measured by the sensor device to outside of the receiver (200).

### [Configuration 11]

The receiver (200) according to any one of configurations 1 to 10, wherein the processor (205) further executes a sixth step of comparing the power supply voltage with a third threshold value, and when it is determined that the power supply voltage is less than or equal to the third threshold value, operating the processor in a power saving mode.

### [Configuration 12]

The receiver (200) according to any one of configurations 1 to 11, wherein the processor (205) further executes a seventh step of transmitting, to outside of the receiver (200), a signal indicating that continuation of operation of the receiver (200) is difficult, when the determination result of the power receiving state of the receiver (200) determined in the third step (S603) is a determination result that the power receiving state is not good (or not preferable).

### [Configuration 13]

A receiver (200) for wirelessly receiving transmitting power composed of AC signals is provided, and the receiver (200) includes:
a processor (205);
a rectifier (202) for rectifying the transmitting power;
an electric power management part (203) for managing a rectified voltage from the rectifier (202); and
a charger (204) to be electrically charged with an output voltage from the electric power management part (203).

In addition, the processor (205) is configured to execute:
a first step (S600, S601) of detecting the rectified voltage and a power supply voltage which is a charging voltage of the charger (204); and
an eighth step of detecting the rectified voltage detected in the first step (S600, S601) and/or a change over time of the power supply voltage detected in the first step (S600, S601), and determining a power receiving state of the receiver (200) based on the detection result.

### [Configuration 14]

The receiver according to configuration 13, wherein, in the eighth step, the following are performed:
a comparison of the rectified voltage detected in the first step (S600, S601) with a first threshold value prescribed for the rectified voltage;
a comparison of the power supply voltage detected in the first step with a second threshold value prescribed for the power supply voltage; and
a detection of a change over time of the power supply voltage detected in the first step (S600, S601), and
wherein a power receiving state of the receiver is determined based on:
   the comparison result of the rectified voltage with the first threshold value;
   the comparison result of the power supply voltage with the second threshold value; and
   the detection result of the change over time of the power supply voltage.

### [Configuration 15]

The receiver (200) according to configuration 13 or 14, wherein, in the eighth step, the power receiving state of the receiver (200) is determined based on a derivative value of the rectified voltage detected in the first step (S600, S601) and/or a derivative value of the power supply voltage detected in the first step (S600, S601).

### [Configuration 16]

A receiver (200) for wirelessly receiving transmitting power composed of AC signals is provided ,and the receiver (200) includes:
a control part (205);
a rectifier (202) for rectifying the transmitting power;
an electric power management part (203) for managing a rectified voltage from the rectifier (202); and
a charger (204) to be electrically charged with an output voltage from the electric power management part (203).

In addition, the control part (205) is configured to execute:
a voltage acquiring part (20533) for detecting the rectified voltage and a power supply voltage which is a charging voltage of the charger (204);
a threshold value comparing part (20534) for comparing the rectified voltage detected by the voltage acquiring part (20533) with a first threshold value prescribed for the rectified voltage, and for comparing the power supply voltage detected by the voltage acquiring part (20533) with a second threshold value prescribed for the power supply voltage; and
a first power receiving state determining part (20534) for determining a power receiving state of the receiver (200) based on at least one of the comparison results performed by the threshold value comparing part (20534).

### [Configuration 17]

A receiver (200) for wirelessly receiving transmitting power composed of AC signals is provided, and the receiver (200) includes:
a control part (205);
a rectifier (202) for rectifying the transmitting power;
an electric power management part (203) for managing a rectified voltage from the rectifier (202); and
a charger (204) to be electrically charged with an output voltage from the electric power management part (203).

In addition, the control part (205) is configured to execute:
a voltage acquiring part (20533) for detecting the rectified voltage and a power supply voltage which is a charging voltage of the charger;
a threshold value comparing part (20534) for comparing the rectified voltage detected by the voltage acquiring part (20533) with a first threshold value prescribed for the rectified voltage, and for comparing the power supply voltage detected by the voltage acquiring part with a second threshold value prescribed for the power supply voltage; and
a third power receiving state determining part (20534) for determining a power receiving state of the receiver (200) based on at least one of the comparison results performed by the threshold value comparing part (20534).

Further, the third power receiving state determining part (20535) determines the power receiving state of the receiver (200) based on a determination table (20522) in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

### [Configuration 18]

A receiver (200) for wirelessly receiving transmitting power composed of AC signals is provided, and the receiver (200) includes:
a control part (205);
a rectifier (202) for rectifying the transmitting power;
an electric power management part (203) for managing a rectified voltage from the rectifier (202); and
a charger (204) to be electrically charged with an output voltage from the electric power management part (203).

In addition, the control part (205) is configured to execute:
a voltage acquiring part (20533) for detecting the rectified voltage and a power supply voltage which is a charging voltage of the charger (204);
a second power receiving state determining part for detecting the rectified voltage detected by the voltage acquiring part (20533) and/or a change over time of the power supply voltage detected by the voltage acquiring part (20533), and for determining a power receiving state of the receiver (200) based on the detection result.

### [Configuration 19]

A program for operating a receiver (200) that wirelessly receives transmitting power composed of AC signals and is provided with a processor (205) is provided.

The receiver (200) includes:
a rectifier (202) for rectifying the transmitting power;
an electric power management part (203) for managing a rectified voltage from the rectifier (202); and
a charger (204) to be electrically charged with an output voltage from the electric power management part (203).

In addition, the program causes the processor (205) to execute:
a first step (S600, S601) of detecting the rectified voltage and a power supply voltage which is a charging voltage of the charger (204);
a second step (S602) of comparing the rectified voltage detected in the first step (S600, S601) with a first threshold value prescribed for the rectified voltage, and comparing the power supply voltage detected in the first step (S600, S601) with a second threshold value prescribed for the power supply voltage; and
a third step (S603) of determining a power receiving state of the receiver (200) based on at least one of the comparison results in the second step (S602).

### [Configuration 20]

A program for operating a receiver (200) that wirelessly receives transmitting power composed of AC signals and is provided with a processor (205) is provided.

The receiver (200) includes:
a rectifier (202) for rectifying the transmitting power;
an electric power management part (203) for managing a rectified voltage from the rectifier (202); and
a charger (204) to be electrically charged with an output voltage from the electric power management part (203).

In addition, the program causes the processor (205) to execute:
a first step (S600, S601) of detecting the rectified voltage and a power supply voltage which is a charging voltage of the charger;
a second step (S602) of comparing the rectified voltage detected in the first step (S600, S601) with a first threshold value prescribed for the rectified voltage, and comparing the power supply voltage detected in the first step (S600, S601) with a second threshold value prescribed for the power supply voltage; and
a third step (S603) of determining a power receiving state of the receiver based on at least one of the comparison results in the second step (S602).

Further, in the third step (S603), the power receiving state of the receiver (200) is determined based on a determination table (20522) in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

### [Configuration 21]

A program for operating a receiver (200) that wirelessly receives transmitting power composed of AC signals and is provided with a processor (205) is provided.

The receiver (200) includes:
a rectifier (202) for rectifying the transmitting power;
an electric power management part (203) for managing a rectified voltage from the rectifier (202); and
a charger (204) to be electrically charged with an output voltage from the electric power management part (203).

In addition, the program causes the processor (205) to execute:
a first step (S600, S601) of detecting the rectified voltage and a power supply voltage which is a charging voltage of the charger (204); and
an eighth step of detecting the rectified voltage detected in the first step (S600, S601) and/or a change over time of the power supply voltage detected in the first step (S600, S601), and determining a power receiving state of the receiver (200) based on the detection result.

### [Configuration 22]

A method to be carried out by a receiver (200) that wirelessly receives transmitting power composed of AC signals and is provided with a processor (205) is provided.

The receiver (200) includes:
a rectifier (202) for rectifying the transmitting power;
an electric power management part (203) for managing a rectified voltage from the rectifier (202); and
a charger (204) to be electrically charged with an output voltage from the electric power management part (203).

In addition, the processor (205) executes:
a first step (S600, S601) of detecting the rectified voltage and a power supply voltage which is a charging voltage of the charger (204);
a second step (S602) of comparing the rectified voltage detected in the first step (S600, S601) with a first threshold value prescribed for the rectified voltage, and comparing the power supply voltage detected in the first step (S600, S601) with a second threshold value prescribed for the power supply voltage; and
a third step (S603) of determining a power receiving state of the receiver based on at least one of the comparison results in the second step (S602).

### [Configuration 23]

A method to be carried out by a receiver (200) that wirelessly receives transmitting power composed of AC signals and is provided with a processor (205) is provided.

The receiver (200) includes:
a rectifier (202) for rectifying the transmitting power;
an electric power management part (203) for managing a rectified voltage from the rectifier (202); and
a charger (204) to be electrically charged with an output voltage from the electric power management part (203).

In addition, the processor (205) executes:
a first step (S600, S601) of detecting the rectified voltage and a power supply voltage which is a charging voltage of the charger;
a second step (S602) of comparing the rectified voltage detected in the first step (S600, S601) with a first threshold value prescribed for the rectified voltage, and comparing the power supply voltage detected in the first step with a second threshold value prescribed for the power supply voltage; and
a third step (S603) of determining a power receiving state of the receiver based on at least one of the comparison results in the second step (S602).

Further, in the third step (S603), the power receiving state of the receiver is determined based on a determination table (20522) in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

### [Configuration 24]

A method to be carried out by a receiver that wirelessly receives transmitting power composed of AC signals and is provided with a processor (205) is provided.

The receiver (200) includes:
a rectifier (202) for rectifying the transmitting power;
an electric power management part (203) for managing a rectified voltage from the rectifier (202); and
a charger (204) to be electrically charged with an output voltage from the electric power management part (203).

In addition, the processor (205) executes:
a first step (S600, S601) of detecting the rectified voltage and a power supply voltage which is a charging voltage of the charger; and
an eighth step of detecting the rectified voltage detected in the first step (S600, S601) and/or a change over time of the power supply voltage detected in the first step (S600, S601), and determining a power receiving state of the receiver (200) based on the detection result.

### [Configuration 25]

A wireless power feeding system (1) is provided, and the wireless power feeding system (1) includes:
a transmitter (100) for wirelessly transmitting transmitting power composed of AC signals; and
a receiver (200) for receiving the transmitting power.

The receiver (200) includes a rectifier (202) for rectifying the transmitting power, an electric power management part (203) for managing a rectified voltage from the rectifier (202), and a charger (204) to be electrically charged with an output voltage from the electric power management part (203).

In addition, the wireless power feeding system (1) is provided with at least one processor (205).

The at least one processor (205) executes:
a first step (S600, S601) of detecting the rectified voltage and a power supply voltage which is a charging voltage of the charger (204);
a second step (S602) of comparing the rectified voltage detected in the first step (S600, S601) with a first threshold value prescribed for the rectified voltage, and comparing the power supply voltage detected in the first step (S600, S601) with a second threshold value prescribed for the power supply voltage; and
a third step (S603) of determining a power receiving state of the receiver (200) based on at least one of the comparison results in the second step (S602).

### [Configuration 26]

A wireless power feeding system (1) is provided, and the wireless power feeding system (1) includes:
a transmitter (100) for wirelessly transmitting transmitting power composed of AC signals; and
a receiver (200) for receiving the transmitting power.

The receiver (200) includes a rectifier (202) for rectifying the transmitting power, an electric power management part (203) for managing a rectified voltage from the rectifier (202), and a charger (204) to be electrically charged with an output voltage from the electric power management part (203).

In addition, the wireless power feeding system (1) is provided with at least one processor (205).

The at least one processor (205) executes:
a first step (S600, S601) of detecting the rectified voltage and a power supply voltage which is a charging voltage of the charger;
a second step (S602) of comparing the rectified voltage detected in the first step (S600, S601) with a first threshold value prescribed for the rectified voltage, and comparing the power supply voltage detected in the first step with a second threshold value prescribed for the power supply voltage; and
a third step (S603) of determining a power receiving state of the receiver based on at least one of the comparison results in the second step (S602).

Further, in the third step (S603), the power receiving state of the receiver is determined based on a determination table (20522) in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

### [Configuration 27]

A wireless power feeding system (1) is provided, and the wireless power feeding system (1) includes:
a transmitter (100) for wirelessly transmitting transmitting power composed of AC signals; and
a receiver (200) for receiving the transmitting power.

The receiver (200) includes a rectifier (202) for rectifying the transmitting power, an electric power management part (203) for managing a rectified voltage from the rectifier (202), and a charger (204) to be electrically charged with an output voltage from the electric power management part (203).

In addition, the wireless power feeding system (1) is provided with at least one processor (205).

The at least one processor (205) executes:
a first step (S600, S601) of detecting the rectified voltage and a power supply voltage which is a charging voltage of the charger (204); and
an eighth step of detecting the rectified voltage detected in the first step (S600, S601) and/or a change over time of the power supply voltage detected in the first step (S600, S601), and determining a power receiving state of the receiver (200) based on the detection result.

### [Configuration 28]

A transmitter (100) to be used in a wireless power feeding system (1) is provided.

The wireless power feeding system (1) includes the transmitter (100) for wirelessly transmitting transmitting power composed of AC signals, and a receiver (200) for receiving the transmitting power.

The receiver (200) includes a rectifier (202) for rectifying the transmitting power, an electric power management part (203) for managing a rectified voltage from the rectifier (202), and a charger (204) to be electrically charged with an output voltage from the electric power management part (203).

In addition, the transmitter (100) is provided with a processor (103) that executes:
a ninth step of receiving, from the receiver (200), a signal representing the rectified voltage and a power supply voltage which is a charging voltage of the charger (204);
a tenth step of comparing the rectified voltage received in the ninth step with a first threshold value prescribed for the rectified voltage, and comparing the power supply voltage received in the ninth step with a second threshold value prescribed for the power supply voltage; and
an eleventh step of determining a power receiving state of the receiver (200) based on at least one of the comparison results in the tenth step.

### [Configuration 29]

A transmitter (100) to be used in a wireless power feeding system (1) is provided.

The wireless power feeding system (1) includes the transmitter (100) for wirelessly transmitting transmitting power composed of AC signals, and a receiver (200) for receiving the transmitting power.

The receiver (200) includes a rectifier (202) for rectifying the transmitting power, an electric power management part (203) for managing a rectified voltage from the rectifier (202), and a charger (204) to be electrically charged with an output voltage from the electric power management part (203).

In addition, the transmitter (100) is provided with a processor (103) that executes:
a ninth step of receiving, from the receiver (200), a signal representing the rectified voltage and a power supply voltage which is a charging voltage of the charger;
a tenth step of comparing the rectified voltage received in the ninth step with a first threshold value prescribed for the rectified voltage, and comparing the power supply voltage received in the ninth step with a second threshold value prescribed for the power supply voltage; and
an eleventh step of determining a power receiving state of the receiver based on at least one of the comparison results in the tenth step.

Further, in the eleventh step, the power receiving state of the receiver (200) is determined based on a determination table in which a determination of the power receiving state of the receiver (200) is prescribed with respect to the respective comparison results of:
whether the detected rectified voltage is less than the first threshold value prescribed for the rectified voltage; and
whether the detected power supply voltage is less than the second threshold value prescribed for the power supply voltage.

### [Configuration 30]

A transmitter (100) to be used in a wireless power feeding system (1) is provided.

The wireless power feeding system (1) includes the transmitter (100) for wirelessly transmitting transmitting power consisting of AC signals, and a receiver (200) for receiving the transmitting power.

The receiver (200) includes a rectifier (202) for rectifying the transmitting power, an electric power management part (203) for managing a rectified voltage from the rectifier (202), and a charger (204) to be electrically charged with an output voltage from the electric power management part (203).

In addition, the transmitter (100) is provided with a processor (103) that executes:
a ninth step of receiving, from the receiver (200), a signal representing the rectified voltage and a power supply voltage which is a charging voltage of the charger (204); and
a twelfth step of detecting the rectified voltage received in the ninth step and/or a change over time of the power supply voltage received in the ninth step, and determining a power receiving state of the receiver (200) based on the detection result.

### [Explanation of Reference numerals]

1... WPT system (wireless power transfer system) or wireless power feeding system
100... Transmitter
101 ... Oscillator
102... Transmitting antenna
103... Microcomputer
104... Data transmitting/receiving device
105... Data transmitting/receiving antenna
200... Receiver
201... Receiving antenna
202... Rectifier circuit
203... Electric power management part
204... Charger
205... Microcomputer
206... Data transmitting/receiving device
207... Data transmitting/receiving antenna
300... First information processing device
400... Second information processing device
2051... A/D converter
2052... Storage part (memory)
2053... Control part
20521... Application program
20522... Determination table
20531... Reception control module
20532... Transmission control module
20533... Voltage acquisition module
20534... Power receiving state determination module

## Claims

1. A receiver for wirelessly receiving transmitting power composed of AC signals, the receiver comprising:
a processor;
a rectifier for rectifying the transmitting power;
an electric power management part for managing a rectified voltage from the rectifier; and
a charger to be electrically charged with an output voltage from the electric power management part,
wherein the processor executes:
a first step of detecting the rectified voltage and a power supply voltage being a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step.

2. A receiver for wirelessly receiving transmitting power composed of AC signals, the receiver comprising:
a processor;
a rectifier for rectifying the transmitting power;
an electric power management part for managing a rectified voltage from the rectifier; and
a charger to be electrically charged with an output voltage from the electric power management part,
wherein the processor executes:
a first step of detecting the rectified voltage and a power supply voltage being a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step,
wherein, in the third step, the power receiving state of the receiver is determined based on a determination table in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

3. The receiver according to claim 1 or 2, wherein, in the third step, the power receiving state of the receiver is determined based on:
whether the rectified voltage detected in the first step is less than or equal to, or less than, the first threshold value; or
whether the power supply voltage detected in the first step is less than or equal to, or less than, the second threshold value.

4. The receiver according to any one of claims 1 to 3, wherein, in the third step, the power receiving state of the receiver is determined based on both of the comparison results in the second step.

5. The receiver according to any one of claims 1 to 4, wherein, in the third step, the power receiving state of the receiver is determined based on a determination table in which a determination that the power receiving state of the receiver is normal, abnormal, or another state is prescribed with respect to:
the comparison result of the rectified voltage with the first threshold value; and
the comparison result of the power supply voltage with the second threshold value.

6. The receiver according to any one of claims 1 to 5, wherein the first threshold value and the second threshold value are different voltage values.

7. The receiver according to claim 1, wherein at least one of the first threshold value or the second threshold value includes a plurality of different threshold values.

8. The receiver according to any one of claims 1 to 7, wherein the processor further executes a fourth step of determining an operation state of the processor based on a change over time of the power supply voltage following activation of the processor.

9. The receiver according to any one of claims 1 to 8, wherein the processor further executes a fifth step of transmitting, to outside of the receiver, a signal representing a determination result of the power receiving state of the receiver determined in the third step.

10. The receiver according to claim 9, wherein the receiver is provided with a sensor device capable of measuring a predetermined physical quantity, and
wherein, in the fifth step, a signal representing a determination result of the power receiving state of the receiver determined in the third step is transmitted to outside of the receiver at a timing of transmitting a signal representing the physical quantity measured by the sensor device to outside of the receiver.

11. The receiver according to any one of claims 1 to 10, wherein the processor further executes a sixth step of comparing the power supply voltage with a third threshold value, and when it is determined that the power supply voltage is less than or equal to the third threshold value, operating the processor in a power saving mode.

12. The receiver according to any one of claims 1 to 11, wherein the processor further executes a seventh step of transmitting, to outside of the receiver, a signal indicating that continuation of operation of the receiver is difficult, when the determination result of the power receiving state of the receiver determined in the third step is a determination result that the power receiving state is not good.

13. A receiver for wirelessly receiving transmitting power composed of AC signals, the receiver comprising:
a processor;
a rectifier for rectifying the transmitting power;
an electric power management part for managing a rectified voltage from the rectifier; and
a charger to be electrically charged with an output voltage from the electric power management part,
wherein the processor executes:
a first step of detecting the rectified voltage and a power supply voltage being a charging voltage of the charger; and
an eighth step of detecting the rectified voltage detected in the first step and/or a change over time of the power supply voltage detected in the first step, and determining a power receiving state of the receiver based on the detection result.

14. The receiver according to claim 13, wherein, in the eighth step, the following are performed:
a comparison of the rectified voltage detected in the first step with a first threshold value prescribed for the rectified voltage;
a comparison of the power supply voltage detected in the first step with a second threshold value prescribed for the power supply voltage; and
a detection of a change over time of the power supply voltage detected in the first step,
wherein a power receiving state of the receiver is determined based on:
the comparison result of the rectified voltage with the first threshold value;
the comparison result of the power supply voltage with the second threshold value; and
the detection result of the change over time of the power supply voltage.

15. The receiver according to claim 13 or 14, wherein, in the eighth step, the power receiving state of the receiver is determined based on a derivative value of the rectified voltage detected in the first step and/or a derivative value of the power supply voltage detected in the first step.

16. A receiver for wirelessly receiving transmitting power composed of AC signals, the receiver comprising:
a control part;
a rectifier for rectifying the transmitting power;
an electric power management part for managing a rectified voltage from the rectifier; and
a charger to be electrically charged with an output voltage from the electric power management part,
wherein the control part includes:
a voltage acquiring part for detecting the rectified voltage and a power supply voltage being a charging voltage of the charger;
a threshold value comparing part for comparing the rectified voltage detected by the voltage acquiring part with a first threshold value prescribed for the rectified voltage, and for comparing the power supply voltage detected by the voltage acquiring part with a second threshold value prescribed for the power supply voltage; and
a first power receiving state determining part for determining a power receiving state of the receiver based on at least one of the comparison results performed by the threshold value comparing part.

17. A receiver for wirelessly receiving transmitting power composed of AC signals, the receiver comprising:
a control part;
a rectifier for rectifying the transmitting power;
an electric power management part for managing a rectified voltage from the rectifier; and
a charger to be electrically charged with an output voltage from the electric power management part,
wherein the control part includes:
a voltage acquiring part for detecting the rectified voltage and a power supply voltage being a charging voltage of the charger;
a threshold value comparing part for comparing the rectified voltage detected by the voltage acquiring part with a first threshold value prescribed for the rectified voltage, and for comparing the power supply voltage detected by the voltage acquiring part with a second threshold value prescribed for the power supply voltage; and
a third power receiving state determining part for determining a power receiving state of the receiver based on at least one of the comparison results performed by the threshold value comparing part,
wherein the third power receiving state determining part determines the power receiving state of the receiver based on a determination table in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

18. A receiver for wirelessly receiving transmitting power composed of AC signals, the receiver comprising:
a control part;
a rectifier for rectifying the transmitting power;
an electric power management part for managing a rectified voltage from the rectifier; and
a charger to be electrically charged with an output voltage from the electric power management part,
wherein the control part includes:
a voltage acquiring part for detecting the rectified voltage and a power supply voltage being a charging voltage of the charger;
a second power receiving state determining part for detecting the rectified voltage detected by the voltage acquiring part and/or a change over time of the power supply voltage detected by the voltage acquiring part, and for determining a power receiving state of the receiver based on the detection result.

19. A program for operating a receiver that wirelessly receives transmitting power composed of AC signals and is provided with a processor,
wherein the receiver includes:
a rectifier for rectifying the transmitting power;
an electric power management part for managing a rectified voltage from the rectifier; and
a charger to be electrically charged with an output voltage from the electric power management part,
wherein the program causes the processor to execute:
a first step of detecting the rectified voltage and a power supply voltage being a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step.

20. A program for operating a receiver that wirelessly receives transmitting power composed of AC signals and is provided with a processor,
wherein the receiver includes:
a rectifier for rectifying the transmitting power;
an electric power management part for managing a rectified voltage from the rectifier; and
a charger to be electrically charged with an output voltage from the electric power management part,
wherein the program causes the processor to execute:
a first step of detecting the rectified voltage and a power supply voltage being a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step,
wherein, in the third step, the power receiving state of the receiver is determined based on a determination table in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

21. A program for operating a receiver that wirelessly receives transmitting power composed of AC signals and is provided with a processor,
wherein the receiver includes:
a rectifier for rectifying the transmitting power;
an electric power management part for managing a rectified voltage from the rectifier; and
a charger to be electrically charged with an output voltage from the electric power management part,
wherein the program causes the processor to execute:
a first step of detecting the rectified voltage and a power supply voltage being a charging voltage of the charger; and
an eighth step of detecting the rectified voltage detected in the first step and/or a change over time of the power supply voltage detected in the first step, and determining a power receiving state of the receiver based on the detection result.

22. A method to be carried out by a receiver that wirelessly receives transmitting power composed of AC signals and is provided with a processor,
wherein the receiver includes:
a rectifier for rectifying the transmitting power;
an electric power management part for managing a rectified voltage from the rectifier; and
a charger to be electrically charged with an output voltage from the electric power management part,
wherein the processor executes:
a first step of detecting the rectified voltage and a power supply voltage being a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step.

23. A method to be carried out by a receiver that wirelessly receives transmitting power composed of AC signals and is provided with a processor,
wherein the receiver includes:
a rectifier for rectifying the transmitting power;
an electric power management part for managing a rectified voltage from the rectifier; and
a charger to be electrically charged with an output voltage from the electric power management part,
wherein the processor executes:
a first step of detecting the rectified voltage and a power supply voltage being a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step,
wherein, in the third step, the power receiving state of the receiver is determined based on a determination table in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

24. A method to be carried out by a receiver that wirelessly receives transmitting power composed of AC signals and is provided with a processor,
wherein the receiver includes:
a rectifier for rectifying the transmitting power;
an electric power management part for managing a rectified voltage from the rectifier; and
a charger to be electrically charged with an output voltage from the electric power management part,
wherein the processor executes:
a first step of detecting the rectified voltage and a power supply voltage being a charging voltage of the charger; and
an eighth step of detecting the rectified voltage detected in the first step and/or a change over time of the power supply voltage detected in the first step, and determining a power receiving state of the receiver based on the detection result.

25. A wireless power feeding system, comprising:
a transmitter for wirelessly transmitting transmitting power composed of AC signals; and
a receiver for receiving the transmitting power,
wherein the receiver includes a rectifier for rectifying the transmitting power, an electric power management part for managing a rectified voltage from the rectifier, and a charger to be electrically charged with an output voltage from the electric power management part,
wherein the wireless power feeding system is provided with at least one processor,
wherein the at least one processor executes:
a first step of detecting the rectified voltage and a power supply voltage being a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step.

26. A wireless power feeding system, comprising:
a transmitter for wirelessly transmitting transmitting power composed of AC signals; and
a receiver for receiving the transmitting power,
wherein the receiver includes a rectifier for rectifying the transmitting power, an electric power management part for managing a rectified voltage from the rectifier, and a charger to be electrically charged with an output voltage from the electric power management part,
wherein the wireless power feeding system is provided with at least one processor,
wherein the at least one processor executes:
a first step of detecting the rectified voltage and a power supply voltage being a charging voltage of the charger;
a second step of comparing the rectified voltage detected in the first step with a first threshold value prescribed for the rectified voltage, and comparing the power supply voltage detected in the first step with a second threshold value prescribed for the power supply voltage; and
a third step of determining a power receiving state of the receiver based on at least one of the comparison results in the second step,
wherein, in the third step, the power receiving state of the receiver is determined based on a determination table in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

27. A wireless power feeding system, comprising:
a transmitter for wirelessly transmitting transmitting power composed of AC signals; and
a receiver for receiving the transmitting power,
wherein the receiver includes a rectifier for rectifying the transmitting power, an electric power management part for managing a rectified voltage from the rectifier, and a charger to be electrically charged with an output voltage from the electric power management part,
wherein the wireless power feeding system is provided with at least one processor,
wherein the at least one processor executes:
a first step of detecting the rectified voltage and a power supply voltage being a charging voltage of the charger; and
an eighth step of detecting the rectified voltage detected in the first step and/or a change over time of the power supply voltage detected in the first step, and determining a power receiving state of the receiver based on the detection result.

28. A transmitter to be used in a wireless power feeding system,
wherein the wireless power feeding system includes the transmitter for wirelessly transmitting transmitting power composed of AC signals, and a receiver for receiving the transmitting power,
wherein the receiver includes a rectifier for rectifying the transmitting power, an electric power management part for managing a rectified voltage from the rectifier, and a charger to be electrically charged with an output voltage from the electric power management part,
wherein the transmitter is provided with a processor that executes:
a ninth step of receiving, from the receiver, a signal representing the rectified voltage and a power supply voltage being a charging voltage of the charger;
a tenth step of comparing the rectified voltage received in the ninth step with a first threshold value prescribed for the rectified voltage, and comparing the power supply voltage received in the ninth step with a second threshold value prescribed for the power supply voltage; and
an eleventh step of determining a power receiving state of the receiver based on at least one of the comparison results in the tenth step.

29. A transmitter to be used in a wireless power feeding system,
wherein the wireless power feeding system includes the transmitter for wirelessly transmitting transmitting power composed of AC signals, and a receiver for receiving the transmitting power,
wherein the receiver includes a rectifier for rectifying the transmitting power, an electric power management part for managing a rectified voltage from the rectifier, and a charger to be electrically charged with an output voltage from the electric power management part,
wherein the transmitter is provided with a processor that executes:
a ninth step of receiving, from the receiver, a signal representing the rectified voltage and a power supply voltage being a charging voltage of the charger;
a tenth step of comparing the rectified voltage received in the ninth step with a first threshold value prescribed for the rectified voltage, and comparing the power supply voltage received in the ninth step with a second threshold value prescribed for the power supply voltage; and
an eleventh step of determining a power receiving state of the receiver based on at least one of the comparison results in the tenth step,
wherein, in the eleventh step, the power receiving state of the receiver is determined based on a determination table in which a determination of the power receiving state of the receiver is prescribed with respect to the respective comparison results of:
whether the detected rectified voltage is less than the first threshold value prescribed for the rectified voltage; and
whether the detected power supply voltage is less than the second threshold value prescribed for the power supply voltage.

30. A transmitter to be used in a wireless power feeding system,
wherein the wireless power feeding system includes the transmitter for wirelessly transmitting transmitting power consisting of AC signals, and a receiver for receiving the transmitting power,
wherein the receiver includes a rectifier for rectifying the transmitting power, an electric power management part for managing a rectified voltage from the rectifier, and a charger to be electrically charged with an output voltage from the electric power management part,
wherein the transmitter is provided with a processor that executes:
a ninth step of receiving, from the receiver, a signal representing the rectified voltage and a power supply voltage being a charging voltage of the charger; and
a twelfth step of detecting the rectified voltage received in the ninth step and/or a change over time of the power supply voltage received in the ninth step, and determining a power receiving state of the receiver based on the detection result.
